# EUROPÄISCHE PATENTSCHRIFT

(11) **EP 2 179 272 B1**
(45) Veröffentlichungstag und Bekanntmachung des Hinweises auf die Patenterteilung: **23.03.2011**
(21) Anmeldenummer: 08774809.1
(22) Anmeldetag: 07.07.2008
(51) Int. Cl.: G01N 21/95, B07C 5/342, B65B 1/48

(54) **OPTISCHE BEFUELLUNGSKONTROLLE VON PHARMAZEUTISCHEN KAPSELN AUF KAPSELFUELLMASCHINEN**
OPTICAL FILLING CONTROL OF PHARMACEUTICAL CAPSULES IN CAPSULE FILLING MACHINES
CONTRÔLE OPTIQUE DE REMPLISSAGE DE GÉLULES PHARMACEUTIQUES SUR DES REMPLISSEUSES DE GÉLULES

(30) Priorität: 10.07.2007 EP 07112146
(43) Veröffentlichungstag der Anmeldung: 28.04.2010
(73) Patentinhaber: Boehringer Ingelheim International GmbH, 55216 Ingelheim am Rhein (DE)
(72) Erfinder: STOECKEL, Peter, 55216 Ingelheim am Rhein (DE); BIEDENBENDER, Frank, 55216 Ingelheim am Rhein (DE); KRUGER, Thomas, 55216 Ingelheim am Rhein (DE)
(74) Vertreter: Hammann, Heinz
(86) Internationale Anmeldenummer: PCT/EP2008/058734
(87) Internationale Veröffentlichungsnummer: WO 2009/007333

(56) Entgegenhaltungen:
- DE-A1- 4 441 686
- DE-A1-102005 049 958
- US-A- 4 847 487
- US-A1- 2001 054 680
- US-B1- 6 207 946

## Beschreibung

Die vorliegende Erfindung betrifft ein Verfahren zur Überwachung der Befüllung einer Kapsel mit einem Medikament mittels Bildanalyse, ein entsprechendes Befüllungsverfahren, die zugehörigen Vorrichtungen, sowie ein Computerprogramm zur Steuerung des Verfahrens.

Pulverförmige Peroralia und Inhalativa werden in der pharmazeutischen Industrie in Kapseln, beispielsweise in Hartgelatinekapseln, abgefüllt. Die zu befüllenden Kapselunterteile werden auf den Kapselfüllmaschinen in Kapselträgern, insbesondere Matrizen gehalten. Dabei handelt es sich um zylindrische Formatteile aus Edelstahl, die von Radialführungsstangen oder von einer Kette gehalten und bewegt werden. Das Kapselunterteil sitzt in einer durchgehenden Bohrung. Ein Bund oder eine Verjüngung im Durchmesser der Bohrung verhindert, dass das Kapselunterteil nach unten durchrutscht. Zur Befüllung der Kapseln sind unterschiedliche Verfahren und Maschinen bekannt. Diese ähneln sich darin, dass sie durchweg volumetrisch arbeiten. Ein vorgegebenes Dosiervolumen wird möglichst homogen mit dem Medikament, das meist in Pulverform vorliegt, gefüllt. Dabei bildet sich ein lose verfestigter Pulverzylinder. Dieser Zylinder wird anschließend aus der Dosierkammer gedrückt und fällt in das Kapselunterteil. Das Kapselunterteil wird nach der Befüllung durch Aufstecken der Kappe verschlossen.

Die bekannten Kapselfüllmaschinen arbeiten mit hohem Durchsatz, so dass bis zu 250000 Kapseln pro Stunde mit Pulver befüllt werden. Die zur Qualitätssicherung verwendeten Maßnahmen umfassen eine stichprobenweise Kontrolle der Kapseln in Hinblick auf die korrekte Füllmenge. Die Qualität der Kapseln wird auf der Grundlage der Stichproben und entsprechender statistischer Berechnung beurteilt. Meist erfolgt die Stichprobenmessung durch Wägung. Ein derartiges Verfahren ist insbesondere bei kleinen Füllmengen aufwendig. In diesem Fall ist nämlich zusätzlich eine Tarawägung der leeren Kapsel erforderlich. Außerdem findet dabei keine 100%-ige Überprüfung der Kapseln statt.

Es besteht daher grundsätzlich Bedarf für eine Qualitätssichernde Inspektion der Kapseln, die einerseits eine 100%-ige Überprüfung aller Kapseln ermöglicht und die andererseits möglichst so durchgeführt werden kann, dass dadurch der Befüllvorgang bzw. der Herstellungsvorgang der Kapseln durch die Inspektion nicht verlangsamt wird.

Beispielsweise ist aus der US 3,969,227 ein Verfahren bzw. eine Vorrichtung bekannt, bei dem bzw. bei der Kapseln mit zwei Lichtstrahlen durchleuchtet werden. Das Füllgut in der Kapsel unterbricht die Lichtstrahlen. Deshalb kann anhand der Intensitätsverteilung in den transmittierten Strahlen auf den Pulverfüllstand in der Kapsel geschlossen werden. Dieses Verfahren ist insofern nachteilig, als es nur eine rein qualitative Aussage darüber zu treffen vermag, ob die Kapsel gefüllt ist oder nicht. Insbesondere bei kleiner Füllmenge in der Kapsel ist die Präzision des Verfahrens unzureichend.

Die Veröffentlichung "Automatische Füllkontrolle für die Abfüllung von Pellets in Hartgelatinekapseln" von W. Pfeifer, G. Marquardt und M. Rommel (Pharm. Ind. 49, Nr. 3, Seiten 291 - 297 [1987]) beschreibt ein Verfahren, bei dem die Oberfläche der Befüllung eines Kapselunterteils mit einem Lichtstrahl angestrahlt und darauf ein Lichtfleck erzeugt wird. Aufgrund der mit der Höhe der Befüllung variierenden Lichtfleckgröße wird der Füllstand der Kapsel bestimmt. Es handelt sich um das so genannte Berghoff-System. In einem weiteren darin diskutierten Verfahren werden die Füllstände mehrerer Kapselunterteile mit einem Taststift abgetastet. Ein zu tiefes Eintauchen eines Stiftes führt zu einer Unterbrechung eines Lichtstrahls. Dieses Verfahren ist sehr ungenau. Zudem eignet es sich wie das vorgenannte Verfahren lediglich für Befüllungen, die sich homogen im Kapselunterteil verteilen. Letzteres Verfahren eignet sich nur für die Überprüfung stillstehender Kapseln. Dazu muss technisch aufwendig die Kapsel nach der Befüllung zum Stillstand gebracht werden und die Herstellungszeit verlängert sich beträchtlich.

Aus der DE 10 2005 049 958 A1 ist ein Verfahren zur Überwachung der Befüllung einer Kapsel mit einem Medikament bekannt, wobei die Kapsel oder Kapselteile in Kapselträgern, insbesondere Matrizen gehalten und transportiert werden und wobei die Kontur der Füllmasse mittels eines optischen Systems bildgebend aufgezeichnet und durch eine Bildanalyse eine Bewertung der Befüllung vorgenommen wird.

Um eine quasi quantitative Auswertung der Bilder vornehmen zu können, müssen diese eine möglichst homogene Qualität, d.h. eine möglichst gleich bleibende Grauwert- oder Farbwertverteilung aufweisen. Änderungen dieser Bildwerte im Betrieb der Kapselfüllmaschine können sich z.B. durch den Niederschlag von Stäuben, den Austausch von Kapselträgern, Kapselmatrizzen oder den Austausch von optischen Komponenten ergeben.

Es ist daher Aufgabe der vorliegenden Erfindung, ein Verfahren zur Überwachung der Befüllung einer Kapsel mit einem Medikament sowie ein derartiges Verfahren in Kombination mit einem Befüllungsvorgang bereitzustellen, bei dem im Vergleich zum Stand der Technik eine verbesserte Kontrolle der Befüllung im Betrieb der Kapselfüllmaschine erreicht wird. Eine im Sinne der vorgenannten Aufgabe vorteilhafte Vorrichtung ergibt sich aus dem nebengeordneten Anspruch. Ferner ist es Aufgabe der Erfindung, ein Computerverfahren zur verbesserten Durchführung und Steuerung der vorliegenden Verfahren und der Vorrichtung anzugeben. Vorteilhafte Ausgestaltungen sind jeweils Gegenstand der nebengeordneten Ansprüche.

Diese Aufgabe wird gemäß Patentanspruch 1 dadurch gelöst, dass optische Kennwerte der Kapselträger (Matrizen) erfasst werden und anhand der Auswertung dieser Kennwerte eine Regelung des optischen Systems erfolgt. Durch die Nachregelung des optischen Systems in Relation zu den optischen Kennwerten jedes Kapselträgers (kapseltragende Matrize) ist gewährleistet, dass sich für jeden Kapselträger eine quantitativ gleiche Bildqualität, insbesondere Grauwert- oder Farbwertverteilung ergibt, so dass eine quantitative Bildauswertung an verschiedenen Kapselträgerplätzen oder Matrizenplätzen zu gleichen Befüllwerten führt.

Gemäß Patentanspruch 8 wird die Aufgabe dadurch gelöst, dass ein Verfahren zur maschinellen, fortlaufenden Befüllung von Kapseln mit einem Medikament bereit gestellt wird, bei dem jeweils wenigstens ein Teil der Kapsel mit einer vorgegebenen Füllmasse von vorgegebener Kontur aus dem Medikament befüllt wird und die optischen Kennwerte jedes Kapselträgers erfasst und in einem elektronischem Zwischenspeicher abgelegt werden und eine Überwachung und Regelung der Befüllung derart erfolgt, dass anhand des Ergebnisses der jeweiligen Überwachung gegebenenfalls die Aussortierung der betreffenden Kapsel bzw. des Teils der Kapsel vorgenommen wird.

Patentanspruch 10 und die nebengeordneten nachfolgenden Ansprüche beschreiben eine Vorrichtung zur Durchführung der Verfahren.

Patentanspruch 13 und die dazu neben geordneten Ansprüche beschreiben kennzeichnende Programmschritte eines Computerprogramms zur Durchführung des Verfahrens und Steuerung der Vorrichtung.

Das erfindungsgemäße Verfahren dient zur Überwachung der Befüllung einer Kapsel mit einem Medikament. Beispielsweise handelt es sich um eine Hartgelatinekapsel. Diese Kapseln bestehen beispielsweise aus einem Unterteil und einer Kappe.

Die Kapsel, die beispielsweise in einer Vorverschlussposition zur Befüllung angeliefert wird, wird in einer Ausgestaltung vor dem erfindungsgemäßen Überwachungsverfahren durch Unterdruck in zwei Teile getrennt. Das Kapselunterteil, als Beispiel für einen zu befüllenden Teil einer Kapsel, wird mit einer vorgegebenen Füllmasse von vorgegebener, geschlossener Kontur befüllt.

Die Füllmasse ergibt sich bei einem zuvor pulverförmigen Medikament aus dem Dosiervolumen und der Dichte des Medikaments. Bei dem Medikament kann es sich um Peroralia oder Inhalativa handeln. Das Pulver wird in der Dosierkammer leicht verfestigt. Der Pulverformling übersteht den freien Fall aus dem Dosierer in das Kapselunterteil in der Regel unbeschadet. Die Form bzw. die scharfe Kontur des Pulverformlings bleiben dabei erhalten. In vielen Fällen sind das Dosiervolumen und damit die darin formgepresste Füllmasse zylinderförmig.

Zur Überwachung des Befüllvorganges wird beispielsweise mit einer elektronischen Kamera und einer geeigneten Optik in das offene Kapselteil hineingeblickt und ein Bild aufgenommen. Hierzu wird das Bild unmittelbar durch eine mit einem digitalen Bildwandler ausgestattete Kamera erfasst oder ein elektronisches Bild einer Kamera durch einen zusätzlichen Wandler digitalisiert. Je nach verwendeter Kamera wird ein Graustufen- oder Farbwertbild aufgenommen. Beispielsweise wird das Innere der Kapsel für die Aufzeichnung von oben beleuchtet. So kann ein halbdurchlässiger Spiegel über dem Kapselteil angeordnet sein, um mittels dieses Spiegels gleichzeitig die Beleuchtung und die Aufzeichnung zur ermöglichen.

Bei der Bildanalyse wird eine Bewertung der Befüllung vorgenommen. Hierzu wird die Kontur analysiert, um eine Bewertung der Befüllung im Vergleich zur vorgegebenen geschlossenen Kontur der Formmasse bzw. des Dosiervolumens vorzunehmen. Nach der Befüllung liegt der Füllstoff, das Medikament als zylinderförmige kompakte Form am Boden der Kapseln. Anhand der Form des Zylinders kann dann eine Auswertung nach der vorliegenden Erfindung erfolgen. Es wurde beobachtet, dass in Fällen, bei denen die Dosierkammer unzureichend gefüllt war, das dosierte Füllmaterial, der Füllzylinder, in Bruchteile zerfällt. Weicht also die Kontur des Füllstoffs in der unteren Kapselhälfte wesentlich von der zylinderförmigen Form ab und/oder ist die Kontur im Vergleich sehr stark zerklüftet, dann ist die Befüllung unter Veränderung der äußeren Kontur der Füllmasse erfolgt, und es liegt eine Fehlbefüllung vor. Somit erlaubt der Konturvergleich zur Sollkontur Aussagen über die Qualität der Abfüllung und macht eine angenähert quantitative Beurteilung der Befüllung ermöglicht. Beispielsweise kann eine fehlbefüllung auch in dem Fall vorliegen, wenn es bei der Abgabe der Füllmasse aus dem Dosiervolumen in den Kapselteil zu einer unvollständigen Ablösung der Füllmasse aus dem Dosiervolumen gekommen ist. Ferner können beim Transport der Füllmasse in den Kapselteil Teile der Füllmasse ausgebrochen sein, was zu einer nicht vollständigen Befüllung geführt hat. Ferner kann das Dosiervolumen noch Reste enthalten haben, was zu einer Überfüllung führen kann.

Gemäß der vorliegenden Erfindung findet eine optische Inspektion der befüllten Kapsel auf der Maschine, kurz bevor die Kapsel verschlossen wird, statt. Zu diesem Zweck wird die Kapsel von oben wie ausgeführt ausgeleuchtet oder durch ein Durchgangsloch in der Matrize von unten durchleuchtet.

Es hat sich herausgestellt, dass die Kapselträger, insbesondere Matrizen in ihren optischen Eigenschaften je nach Ausgestaltung der Bohrung, des Materials und der Oberflächenbeschaffenheit unterschiedliche optische Eigenschaften aufweisen. Dadurch können insbesondere die Bildhelligkeits-, die Grauwert- und die Farbwertverteilung in Abhängigkeit des Matrizenplatzes, der Matrizennummer in der Kapselfüllmaschine variieren. Im Dauerbetrieb ist es weiterhin möglich, dass bei Abfüllung von feinen Pulvern eine Verstaubung der Maschinenkomponenten auftritt. Dieser Staub setzt sich auch auf der inneren Oberfläche der Durchgangsbohrung in der Matrizen ab. Es hat sich gezeigt, dass das Lichttransmissionsverhalten der Matrize erstaunlich stark vom Verstaubungsgrad abhängt. Eine stark verstaubte Matrize streut das Licht stärker, so dass die integrale Lichtintensität im Kamerabild sinkt. Um eine zuverlässige Auswertung der Kamerabilder zu gewährleisten, muss jedoch die integrale Lichtintensität in den Bildern möglichst konstant gehalten werden.

Um dies zu gewährleisten, werden die optischen Kennwerte der Kapselträger erfasst. Unter dem optischen Kennwert eines Kapselträgers wird seine Reflektivität bei eingestrahltem Licht, bzw. seine Transmissionseigenschaft bei Durchstrahlung durch eine Lochöffnung verstanden. Dabei werden die Reflektivität und die Transmissionseigenschaften entweder im Leerlauf der Kapselfüllmaschine ohne eingelegte Kapseln, oder im Leerlauf mit Leerkapselteilen ermittelt. Besonders vorteilhaft findet eine durchgehende Erfassung der Reflektivität und Transmission im Betrieb der Kapselfüllmaschine statt. Dabei werden die Kennwerte Reflektivität und Transmission mit eingesetztem Kapselunterteil und Befüllung gemessen. Die Kennwertbestimmung kann mittels eines photosensitiven Elementes erfolgen, welches die Intensität des rückgestreuten Lichtes, bzw. im Falle der Transmission des durchstrahlten Lichtes misst.

Vorteilhaft ist es auch möglich, aus den aufgenommenen Bilddaten die reflektierte oder transmittierende Lichtintensität durch Summation oder Mittelwertbildung der Bildmatrize oder Teilen der Bildmatrize zu errechnen, um derart den aktuellen optischen Kennwert eines Kapselträgers, bzw. eines Matrizenplatzes in der Maschine zu bestimmen.

Dadurch wird erreicht, dass jeder Matrize, bzw. jedem Platz zur Aufnahme einer Kapsel ein bestimmter Reflektivitätswert oder bestimmter Transmissionswert oder ein bestimmter proportionaler Lichtintensitätswert zugeordnet werden kann. Diese Werte werden in einem Speicher, insbesondere Zwischenspeicher abgelegt.

Auf Basis der im Speicher abgelegten Kennwerte ist vorgesehen, eine Regelung der optischen Komponenten vorzunehmen.

Erfindungsgemäß wird dazu die Intensität der verwendeten Lichtquelle bei jeder Bildaufnahme so geregelt, dass die Lichtintensität einen Sollwert annimmt.

Der Sollwert wird beispielsweise durch Mittelwertbildung über einen Befülldurchlauf, dessen Stichprobenanzahl der Anzahl der Matrizenbefüllplätze der Maschine entspricht oder über mehrere Durchläufe bestimmt.

Bei Verwendung einer Leuchtdiode, insbesondere Hochleistungs- LED als Lichtquelle wird zur Anpassung der Lichtintensität bevorzugt aus der Spannungs-Intensitätskennlinie der Diode ein der nötigen Intensität proportionaler Spannungskennwert entnommen und die Diode mit diesem Spannungswert angesteuert. Die Diodenkennlinie ist dazu in der Steuerung hinterlegt. Die Regelung erfolgt durch eine per Rechner ansteuerbare Spannungs- oder Stromquelle.

Vorteilhaft wird die Leuchtdiode gepulst betrieben, d.h. es wird nur für die Belichtungsdauer eine Spannung an die Diode angelegt. Hierdurch können deutlich höhere Maximalspannungen kurzzeitig an die Diode angelegt werden, ohne dass Schädigungen der Diode, insbesondere durch Überhitzungen erfolgen. Vorteilhaft kann die Diode somit in einem breiten Intensitätsbereich betrieben werden, so dass auch große Transmissionseigenschaftsvariationen der Kapselträger, bzw. Matrizen ausgeglichen werden können.

Ergänzend oder alternativ zur beschriebenen Ansteuerung der Lichtquelle ist auch denkbar, zur Einstellung eines Sollwertes der Lichtintensität im Bild die Verschlusszeit der Bildkamera entsprechend anzusteuern. Hierzu werden bevorzugt CCD -Kameras oder CMOS Bildwandler mit Bildwiederholfrequenzen von 10 - 1000 Hertz und einer elektrischen Verschlusszeit von 1 Mikrosekunde - 100 Millisekunden eingesetzt. Vorteilhaft werden Belichtungszeiten, d.h. Ansteuerzeiten der Leuchtdiode und/oder Verschlusszeiten der Kamera von 10 Mikrosekunden - 100 Mikrosekunden, besonders bevorzugt 30 - 70 Mikrosekunden gewählt.

Durch die Nachregelung des optischen Systems in Relation zu den optischen Kennwerten jedes Kapselträgers ist gewährleistet, dass sich für jeden Kapselträger, jeden Matrizenplatz in der Kapselfüllmaschine eine qualitativ gleiche Bildqualität, insbesondere Grauwert- oder Farbwertverteilung ergibt, so dass eine quantitative Bildauswertung an verschiedenen Kapselträgerplätzen oder Matrizenplätzen zu gleichen Befüllwerten führt.

Vorteilhaft wird die Steuerung des Verfahrens mit einem Computerprogramm vorgenommen, welche auf einem Prozessrechner in der Vorrichtung installiert ist. Mittels dieser Software wird die integrale Lichtintensität in den Bildern fortlaufend überwacht und für jede Matrizennummer aufgezeichnet. Die mittlere integrale Lichtintensität der Bilder von jeder einzelnen Matrize ist die Eingangsgröße für einen Regelalgorithmus, der die Abweichung der Lichtintensität vom Sollwert ermittelt und die LED-Spannung so nachregelt, dass die tatsächliche Intensität im Bild sich allmählich dem Sollwert annähert. Es gibt also für jede Matrize einen Regelalgorithmus und eine zeitlich veränderliche, matrizenspezifische LED-Spannung.

Zur Konturuntersuchung kann es vorteilhaft sein, die erhaltenen Bilder, die im Prozessrechner als Bildmatrize vorliegen, rechnerisch zu korrigieren, insbesondere zu normieren. Beispielsweise ist jeder Bildpunkt in einem Graustufenbild durch einen Zahlenwert zwischen 0 und 255 hinterlegt. Ergeben sich bei der Messung eines Einzelbildes nur Graustufenwerte zwischen 50 und 200 so können diese Werte rechnerisch auf 0 bis 255 normiert, d.h. gespreizt werden, um das Bild stärker auszuleuchten. Die Bilddaten und auch weitere Prozessdaten wie Kapselfüllgrad, Lichtintensität und Steuerspannungen werden auf einem Monitor online visualisiert, um dem Bedienpersonal eine zusätzliche Information über den Status der Kapselfüllanlage zu geben.

Die Messwerte der optischen Befüllüberwachung können mit den Daten der Tara Gewichtsmessungen abgeglichen werden, um eine Eichung der Daten der optischen Befüllüberwachung anhand der Tara Messungen vorzunehmen.

Die Erfindung betrifft ferner ein Verfahren zur maschinellen, fortlaufenden Befüllung von Kapseln mit einem Medikament, wobei jeweils wenigstens ein Teil der Kapsel mit einer vorgegebenen Füllmasse von vorgegebener Kontur aus dem Medikament befüllt wird und im Weiteren eine Überwachung der Befüllung gemäß einer der zuvor beschriebenen Ausführungsformen erfolgt. Bei der maschinellen, fortlaufenden Befüllung erfolgt diese nach dem so genannten "Inline"-Verfahren, das heißt die Befüllung erfolgt fließbandartig. Das Überwachungsverfahren in den zuvor beschriebenen Ausführungsformen ermöglicht aufgrund seiner vergleichsweise hohen Geschwindigkeit, mit der die Erfassung und Analyse der Füllmasse erfolgt, eine vollständige, zur Befüllung synchrone Überwachung der Kapseln. Beispielsweise arbeiten derzeitige Befüllungsverfahren mit einem Ausstoß von 80.000 Kapseln pro Stunde. Da das erfindungsgemäße Überwachungsverfahren für die Überwachung einer einzelnen Kapsel einen Zeitraum von 45 ms deutlich unterschreitet, kann das erfindungsgemäße Überwachungsverfahren leicht mit den bekannten Befüllungsverfahren kombiniert werden, um eine vollständige und effektive Qualitätsüberwachung zu erreichen. Es handelt sich bei dem Befüllungsverfahren beispielsweise um ein so genanntes Stopfverfahren, bei dem das Dosiervolumen durch Matrizenscheiben mit entsprechenden Bohrungen versehen ist. Anhand des Ergebnisses der jeweiligen Überwachung erfolgt gegebenenfalls die Aussortierung der betreffenden Kapsel. Beispielsweise wird die Kapsel bzw. das befüllte Kapselunterteil beim Weitertransport durch eine Luftdüse aus dem Strom der übrigen Kapseln gestoßen. In einer Ausführungsform erfolgt die Aussortierung der als falsch befüllt erachteten Kapsel um etwa 450 ms verzögert gegenüber der Befüllung. Beispielsweise wird das Kapselunterteil in der Zwischenzeit vollständig verschlossen oder zur Verpackung weitertransportiert. Dadurch steht ausreichen Zeit für eine mögliche verzögerte Auswertung zur Verfügung.

Die Befüllung erfolgt nach dem Stechheberprinzip. Das Stechheberprinzip wird nachfolgend an einem Beispiel beschrieben. Während beim Stopfverfahren das Dosiervolumen durch Matrizenscheiben mit entsprechenden Bohrungen gebildet wird, wird im Stechheber das Dosiervolumen durch definiertes Zurückziehen eines Stahlstößels in einer Stahlhülse realisiert. Anschließend taucht der Stechheber in ein möglichst homogenes aus dem Medikament bestehendes Pulverbett bis auf eine bestimmte Tiefe ein. Dabei wird Pulver in das unten offene, zylindrische Dosiervolumen gedrückt, bis das Pulver das Volumen vollständig ausfüllt und so eine zylindrische Füllmasse bildet. Nun wird der Stechheber aus dem Pulverbett herausgehoben. Er durchläuft eine Absaugstrecke, in der er von äußerlich anhaftendem Pulver befreit wird.

Gleichzeitig schleift die offene Unterseite des Stechhebers über eine sorgfältig einjustierte plane Fläche. Auf diese Weise wird das überschüssige Pulver von der Unterseite ebenfalls entfernt und die Unterseite des Pulverzylinders im Dosiervolumen glatt abgezogen. Der Stechheber läuft aus der Absaugstrecke heraus und erreicht wenig später eine Position direkt über einem offenen Kapselunterteil. Der Stößel des Stechhebers drückt nun den Pulverzylinder, der ein genau definiertes Volumen besitzt, aus der Dosierkammer. Durch eine ruckartige Auf- und Abwärtsbewegung des Stößels wird erreicht, dass sich der Pulverzylinder von der Stößelstirnfläche löst. Die Distanz von beispielsweise etwa 14 mm bis zum Boden des Kapselunterteils legt die zylinderförmige Füllmasse im freien Fall zurück. Es hat sich gezeigt, dass das erfindungsgemäße Überwachungsverfahren sich vorteilhaft mit dem Stechheberverfahren kombinieren lässt.

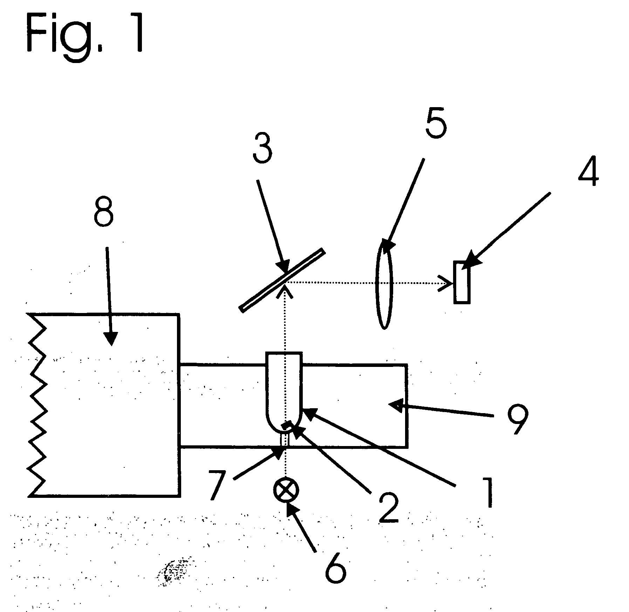

Nachfolgend wird eine Ausführungsform des erfindungsgemäßen Überwachungsverfahrens, die zusammen mit einem Befüllungsverfahren, das nach dem Stechheberprinzip arbeitet, verwendet wird, beschrieben. Die zugehörige Vorrichtung wird schematisch in Figur 1 Ausschnittsweise dargestellt.

Die Kapselunterteile 1 stecken jeweils in Edelstahlmatrizen, die ihrerseits vom Schlitten 9 eines Transportsystems 8 der Befüllungsanlage gehalten werden. Diese Schlitten 9 bewegen sich kurvengesteuert auf kreisähnlichen Bahnen in einer horizontalen Ebene unterhalb von den Stechhebern (nicht dargestellt). Auf dieser Bahn gibt es kurz hinter der Position, in der die Befüllung des Kapselunterteils 1 mit der aus Pulver bestehenden Füllmasse erfolgt, einen Bereich, in dem die Schlitten 9 mit der Matrize weitgehend freigestellt und gut zugänglich sind. Mit Hilfe einer CCD-Kamera 4 und einer zugehörigen Optik 3, 5 wird von oben in das offene Kapselunterteil 1 hinein kurz nach der erfolgten Befüllung ein Bild aufgezeichnet und die Bilder zur Auswertung weitergeleitet. Dazu werden die Kamerabilder auf einen Computer übertragen und dort mit einem geeigneten Algorithmus ausgewertet. Um die Auswertung der Bilder zu erleichtern und vor allem möglichst unempfindlich gegenüber Störungen zu machen, werden die Bilder im Kontrast gesteigert. In dieser Hinsicht ist es ungünstig, von oben in das Kapselunterteil 1 die Füllmasse 2 lediglich anzuleuchten. Stattdessen hat es sich als vorteilhaft erwiesen, das Kapselunterteil 1 von unten mit einem intensiven Lichtblitz zu durchleuchten und das Bild im Gegenlicht aufzunehmen, wie mit den gestrichelten Pfeilen in Figur 1 skizziert ist. Dazu befindet sich ein durchgängiges Loch 7 im Schlitten 9 und in den Matrizen, in denen die Kapselunterteile 1 stecken. Das Kapselunterteil 1 wird mit Hilfe einer Leuchtdiode 6, die unterhalb der Bewegungsebene des Schlittens 9 angeordnet ist, durchleuchtet.

Oberhalb der Bewegungsebene des Schlittens befindet sich ein Spiegel 3, der das durch das Kapselunterteil 1 transmittierte Licht im rechten Winkel reflektiert und durch ein Objektiv 5 hindurch auf den CCD-Chip 4 einer Kamera projiziert wird. Die Schlitten mit den Kapselunterteilen bewegen sich mit einer Bahngeschwindigkeit von etwa 1,30 m/s zwischen Lichtquelle und Spiegel hindurch. Da die Kapseln nur einen Durchmesser von etwa 5 mm besitzen, wird ein entsprechend großer Abbildungsmaßstab gewählt. Damit unter diesen Bedingungen trotzdem hinreichend scharfe Bilder entstehen, werden entsprechend kurze Kamerabelichtungszeiten verwendet. Um trotz der kurzen Integrationszeit des CCD-Chips 4 ein gutes Signal-Rausch-Verhältnis zu erzielen und um die Blende des Objektivs im Interesse einer ausreichenden Schärfentiefe nicht allzu weit öffnen zu müssen, wird die Kapsel mit sehr intensivem Licht einer LED 6 durchleuchtet. Es hat sich gezeigt, dass entsprechende Lichtintensitäten leicht und zuverlässig mit Leuchtemitterdioden (LEDs) erreicht werden. Die Kamerabelichtungszeit beträgt beispielsweise 50 µs. In dieser Zeit hat sich das Kapselunterteil um ca. 65 µm weiterbewegt. Die aus der Bewegung resultierende Unschärfe des Bildes ist vernachlässigbar.

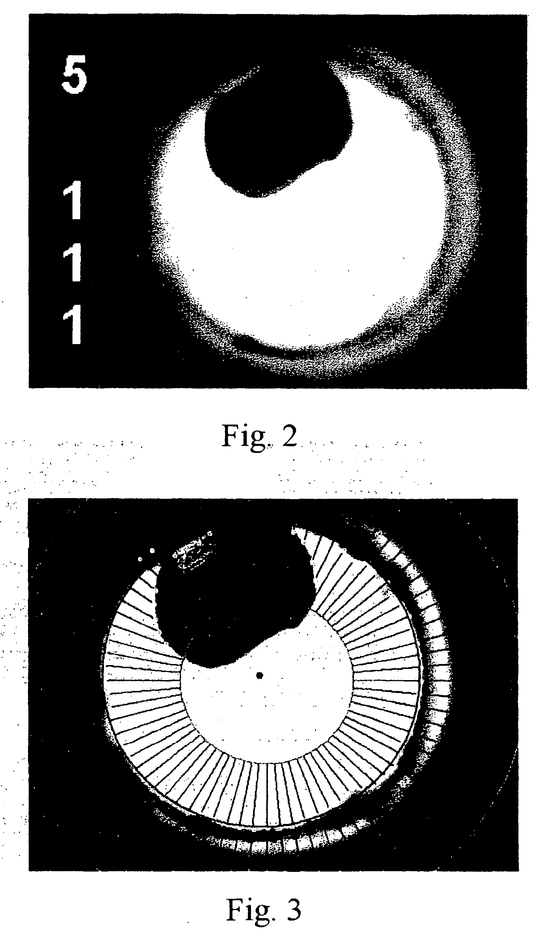

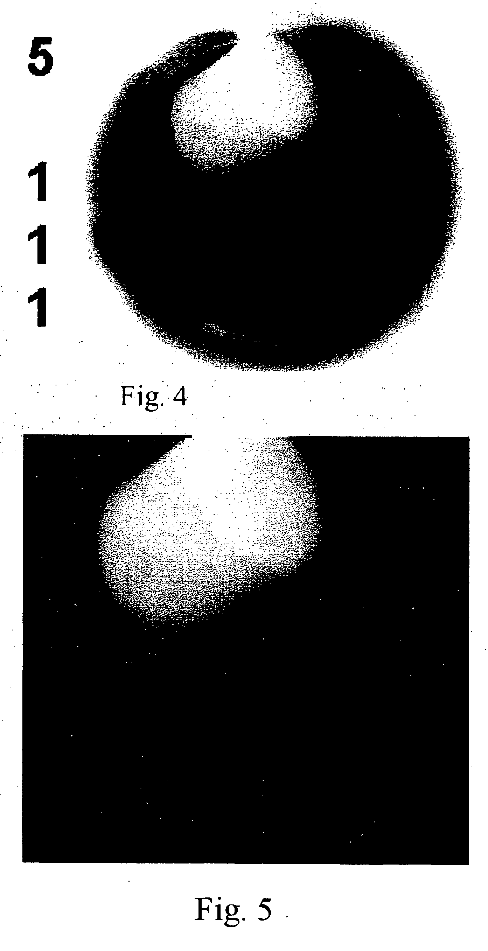

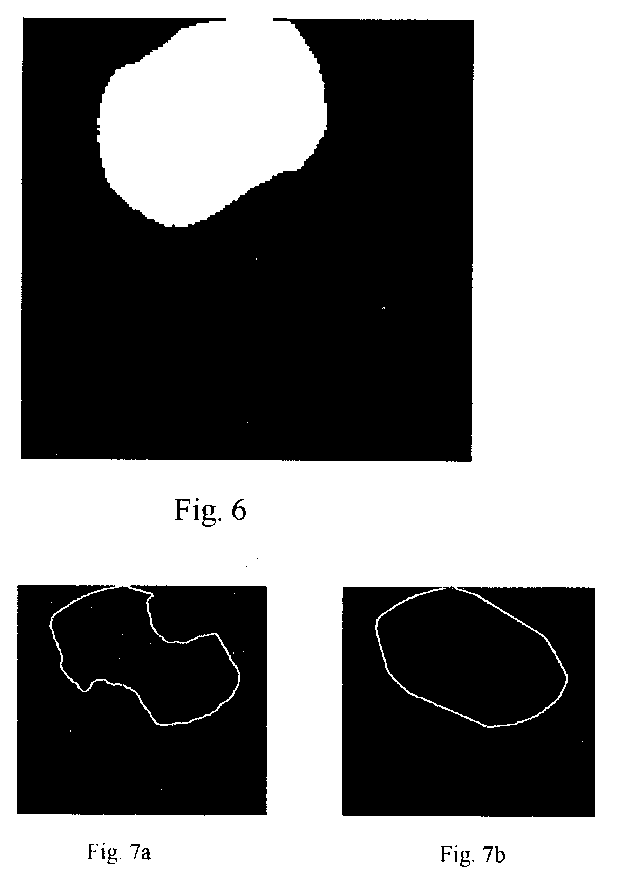

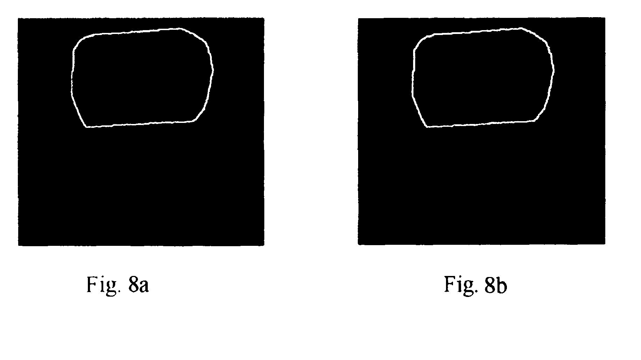

Im Einzelnen vollzieht sich die Bildverarbeitung in folgenden Schritten:
1. Von einer Kamera wird ein Grauwertbild aufgezeichnet, wobei in das Bild eine Kennung eingeblendet wird, um eine eindeutige Zuordnung zwischen Kapselteil und Aufzeichnung zu erhalten, wie in Fig. 2 gezeigt ist.
2. Da die Kapselunterteile nicht immer an derselben Position zu sehen sein können, wird die Kapsel im Bild lokalisiert, wie Fig. 3 zeigt.
3. Das Bild wird invertiert, wie in Fig. 4 gezeigt.
4. Anschließend wird das Bild so maskiert, dass nur noch der Bereich im Innern der Kapsel übrig bleibt, wie Fig. 5 zeigt.
5. Das Grauwertbild wird mit Hilfe eines in geeigneter Weise festgelegten Schwellenwerts in ein Binärbild umgewandelt, wie Fig. 6 zeigt.
6. Eine zerbrochene Füllmasse ist dadurch charakterisiert, dass die Kontur des Umfangs konkave Bereiche aufweist. Die konkaven Bereiche werden mittels des Konvexitätsparameters ermittelt. Die Figuren 7a und 8a zeigen jeweils die Original-Kontur, d.h. die aufgezeichnete Kontur. Die Figuren 7b und 8b zeigen jeweils eine durch eine konvexe Hülle angenäherte Form der aufgezeichneten Kontur. Der Konvexitätsparameter α ist gleich dem Quotienten aus dem Umfang der konvexen Annäherung und dem Umfang der Original-Kontur. Im Fall der Figuren 7a und 7b ergibt sich beispielsweise ein α-Wert von 0,903, wohingegen der a-Wert der Figuren 8a und 8b 0,994 beträgt. Demnach entspricht die Figur 7a bzw. 7b einer fehlerhaften Befüllung des Kapselunterteils, wohingegen die Figur 8a bzw. 8b einer fehlerfreien Befüllung mit einem a-Wert von nahezu 1 entspricht.

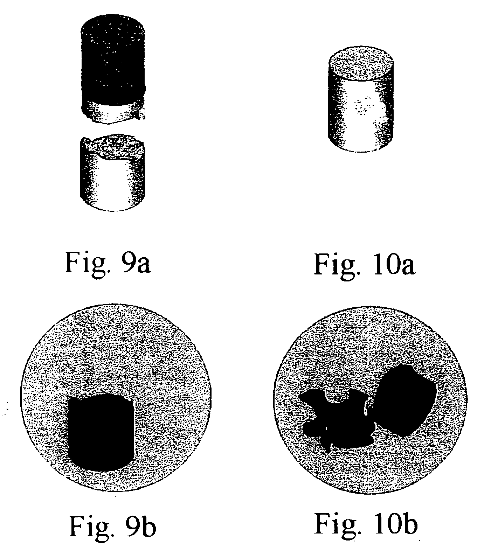

Die Figuren 9a, 9b, 10a und 10b verdeutlichen die Zusammenhänge zwischen beschädigter Füllmasse, unterfüllter Kapsel und aufgezeichneter Kontur. In Figur 9a ist die aus Pulver bestehende Füllmasse nicht vollständig vom Stößel abgefallen. Ein Teil der Füllmasse ist hängen geblieben. Dies kann beispielsweise am ungünstigen Haftverhalten des Pulvers liegen. Bei der Aufzeichnung, also nach der Befüllung und wie in Fig. 9b dargestellt, ist zwar die Füllmasse an sich nicht weiter zerbrochen, ist aber aufgrund des nur teilweisen Abriss vom Stößel zerklüftet und wird vom Überwachungsverfahren als fehlerhaft detektiert. In Figur 10a ist die Dichte der Füllmasse inhomogen, d.h. teilweise zu niedrig, so dass über das gesamte Volumen gemittelt die Dichte zu gering ist. Beispielsweise liegt das an einem inhomogenen Pulverbett oder an schlecht verfüllten Einstichlöchern. Wie in Fig. 10b gezeigt, ist der Pfropfen nach der Befüllung und bei der Aufzeichnung aufgrund mangelnder Stabilität in mehrere Bruchstücke zerbrochen, und eine fehlerhafte Befüllung ist u.a. durch das Vorliegen der Bruchstücke besonders leicht zu detektieren.

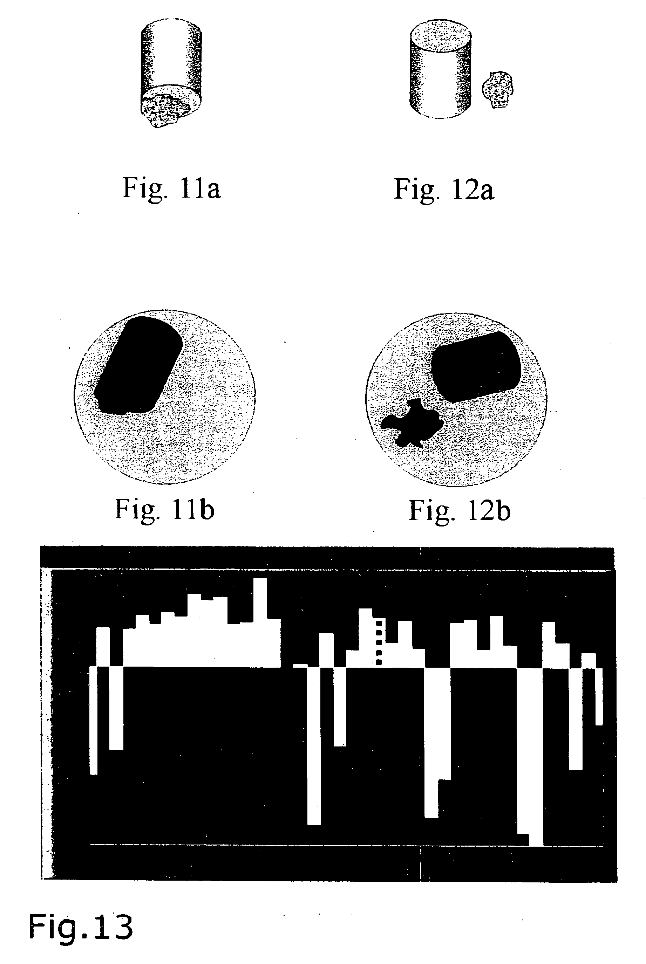

Die Figuren 11a, 11b, 12a und 12b verdeutlichen die Zusammenhänge zwischen beschädigter Füllmasse, überfüllter Kapsel und aufgezeichneter Kontur. In Figur 11a ist die Unterseite der Füllmasse nicht sauber ausgebildet. Dies kann beispielsweise an einer schlecht eingestellten Absaugstrecke liegen. Bei der Aufzeichnung, also nach der Befüllung und wie in Fig. 11b dargestellt, ist zwar die Füllmasse an sich nicht zerbrochen, aber aufgrund der unsauberen Ausbildung der Unterseite ist der Schatten im Bild zu groß und zu zerklüftet. Deshalb wird vom Überwachungsverfahren die zu dem Bild gehörende Kapsel als schlechte Kapsel klassifiziert.

In Figur 12a ist gezeigt, dass neben der eigentlichen Füllmasse zusätzliche Sekundärpartikel in das Kapselunterteil gelangen. Dies kann an Pulveranhaftungen an Teilen der Dosiereinrichtung, verschmutzten Matrizenscheiben und Pulverakkumulationen oberhalb der Stößelspitze liegen. Bei der Aufzeichnung, also nach der Befüllung und wie in Fig. 12b dargestellt, ist zwar die Füllmasse an sich nicht zerbrochen. Die Sekundärbrocken werden vom Bildauswertealgorithmus erkannt. Liegt die Fläche dieser Brocken oberhalb einer definierten Grenze, dann enthält die Kapsel wahrscheinlich zu viel Pulver und wird als "schlecht" betrachtet.

7. Durch eine Verstaubung der Kapselmaschine tritt der Effekt auf, dass sich die optischen Eigenschaften des Systems, insbesondere die Lichtintensität der Bilder ändern können: So weisen unterschiedliche Kapselträger bzw. unterschiedliche Matrizen bedingt durch ihre Oberflächeneigenschaften ein unterschiedliches Transmissionsverhalten auf. Diese Unterschiede werden noch verstärkt durch eine Verstaubung der Anlage. Da die Anlage im Dauerbetrieb arbeitet, kann zwischen den Wartungsintervallen keine Reinigung erfolgen.

In der Praxis zeigt sich, dass die Matrizen in sehr unterschiedlichem Ausmaß verstauben. Die Ursache dafür ist in den individuell unterschiedlichen

Oberflächeneigenschaften der Matrizenbohrungen und in der mechanischen Variabilität im Bereich der Staubabsaugung innerhalb der Maschine zu suchen. Infolgedessen wachsen die Unterschiede in den Transmissionseigenschaften der einzelnen Matrizen beim Dauerbetrieb der Maschine langsam immer weiter an, bis sich allmählich eine "stationäre Verstaubung" einstellt. Dieser Prozess kann dazu führen, dass sich die integrale Lichtintensität in den Bildern, die von bestimmten Matrizen stammen, schließlich um 30 und mehr Prozent unterscheidet, wie Fig. 13 zeigt.

Mittels eines Computerprogramms wird die integrale Lichtintensität in den Bildern fortlaufend überwacht und für jede Matrizennummer aufgezeichnet, wie in Fig. 13 zu sehen ist. Die mittlere integrale Lichtintensität der Bilder von jeder einzelnen Matrize ist die Eingangsgröße für einen Regelalgorithmus, der die Abweichung der Lichtintensität vom Sollwert ermittelt und die LED-Spannung so nachregelt, dass die tatsächliche Intensität im Bild sich allmählich dem Sollwert annähert.

Es gibt also für jede Matrize genau einen Regelalgorithmus und eine zeitlich veränderliche, matrizenspezifische LED-Spannung. Nach der Auswertung eines jeden Bildes übermittelt die Software für die aktuelle Matrize den Sollwert für die LED-Spannung über einen eigens für diesen Zweck eingerichteten Bus an eine SPS. Dort wird der Wert in einem adressierbaren Register abgelegt.

Während dessen dreht sich der Dosierkopf in der Maschine weiter. Sobald die betreffende Matrize erneut die Kameraposition erreicht, ruft die SPS für diese Matrize den Sollwert für die LED-Spannung aus dem Register ab und stellt die Spannung entsprechend ein.

Bei jeder Umdrehung des Dosierkopfes der Maschine werden die matrizenspezifischen LED-Spannungen neu angepasst. Auf diese Weise werden die Unterschiede in der integralen Lichtintensität von Abb. 13 immer weiter nivelliert, bis sie praktisch verschwunden sind. Wenn sich im Dauerbetrieb der Maschine die Transmissionseigenschaften der Matrizen durch die Verstaubung allmählich ändern, trägt der Regelalgorithmus diesem Prozess durch ständige Korrektur der LED-Spannung Rechnung.

Besonders bevorzugt gelangt das erfindungsgemäße Verfahren bei Kapseln zur Anwendung, die pulverförmige Medikamente für die Inhalation, so genannte Inhalativa, enthalten. Diese pulverförmigen Medikamente können einen Wirkstoff im Gemisch mit einem physiologisch unbedenklichen Hilfsstoff enthalten.

Als physiologisch unbedenkliche Hilfsstoffe seien beispielsweise genannt: Monosaccharide (z.B. Glucose oder Arabinose), Disaccharide (z.B. Lactose, Saccharose, Maltose oder Trehalose), Oligo- und Polysaccharide (z.B. Dextrane), Polyalkohole (z.B. Sorbit, Mannit, Xylit), Salze (z.B. Natriumchlorid, Calciumcarbonat) oder Mischungen dieser Hilfsstoffe miteinander. Bevorzugt gelangen Mono- oder Disaccharide zur Anwendung, wobei die Verwendung von Lactose, Glucose oder Trehalose, bevorzugt Lactose oder Glucose, insbesondere, aber nicht ausschließlich in Form ihrer Hydrate, bevorzugt ist. Als besonders bevorzugt im Sinne der Erfindung gelangt Lactose, höchst bevorzugt Lactosemonohydrat als Hilfsstoff zur Anwendung.

Die genannten Hilfsstoffe sind üblicherweise dadurch gekennzeichnet, daß der Hilfsstoff eine mittlere Teilchengröße von 10 - 50 µm aufweist.

Dabei wird unter der mittleren Teilchengröße im hier verwendeten Sinne der 50 % - Wert aus der Volumenverteilung gemessen mit einem Laserdiffraktometer nach der Trockendispersionsmethode verstanden.

Bei den im Rahmen der vorliegenden Erfindung genannten prozentualen Angaben, handelt es sich stets um Gewichtsprozent, soweit nichts Gegenteiliges spezifisch hervorgehoben wird.

In besonders bevorzugten Inhalationspulvern ist der Hilfsstoff durch eine mittlere Teilchengröße von 12 bis 35 µm, besonders bevorzugt von 13 bis 30 µm gekennzeichnet.

Alternative pharmazeutische Zusammensetzungen sind ferner dadurch gekennzeichnet, daß der Hilfsstoff aus einem Gemisch von gröberem Hilfsstoff mit einer mittleren Teilchengröße von 17 bis 50µm, besonders bevorzugt von 20 bis 30µm und feinerem Hilfststoff mit einer mittleren Teilchengröße von 2 bis 8µm, besonders bevorzugt von 3 bis 7µm besteht. Bevorzugt sind Inhalationspulver bei denen der Anteil von feinerem Hilfsstoff an der Gesamthilfsstoffmenge 3 bis 15%, besonders bevorzugt 5 bis 10% beträgt.

Wird im Rahmen der vorliegenden Erfindung auf die Bezeichnung Gemisch Bezug genommen, so ist hierbei stets eine Mischung zu verstehen, die durch Mischen zuvor klar definierter Komponenten erhalten wurde. Entsprechend sind beispielsweise als Hilfsstoffgemisch aus gröberen und feineren Hilfsstoffanteilen nur solche Gemische zu verstehen, die durch Mischen einer gröberen Hilfsstoffkomponente mit einer feineren Hilfsstoffkomponente erhalten werden.

Die gröberen und feineren Hilfsstoffanteile können aus dem chemisch gleichen oder aus chemisch verschiedenen Substanzen bestehen, wobei Inhalationspulver, bei denen der gröbere Hilfsstoffanteil und der feinere Hilfsstoffanteil aus der selben chemischen Verbindung bestehen bevorzugt sind.

Für die Anwendung der erfindungsgemäßen Inhalationspulver mittels pulverhaltiger Kapseln werden bevorzugt Kapseln verwendet, deren Hülle aus Gelatine, Cellulosederivaten, Stärke, Stärkederivaten, Chitosan oder synthetischen Kunststoffen gefertigt ist.

Wird Gelatine als Kapselmaterial verwendet, so kann diese im Gemisch mit anderen Zusätzen ausgewählt aus der Gruppe bestehend aus Polyethylenglycol (PEG), bevorzugt PEG 3350, Glycerol, Sorbitol, Propylenglycol, PEO-PPO-Blockcopolymeren und anderen Polyalkoholen und Polyethern zum Einsatz kommen. Besonders bevorzugt wird im Rahmen der vorliegenden Erfindung Gelatine im Gemisch mit PEG, bevorzugt PEG 3350, verwendet. Besonders bevorzugt enthält eine erfindungsgemäße Gelatine-Kapsel PEG in einem Anteil von 1-10% (Gew-%), bevorzugt 3-8 %. Besonders bevorzugte Gelatine-Kapseln enthalten PEG in einem Anteil von 4-6%, wobei ein PEG-Anteil von etwa 5% erfindungsgemäß höchstbevorzugt ist.

Werden Cellulosederivate als Kapselmaterial verwendet, so ist die Verwendung von Hydroxypropylmethylcellulose, Hydroxypropylcellulose, Methylcellulose, Hydroxymethylcellulose und Hydroxyethylcellulose bevorzugt. Besonders bevorzugt wird in diesem Fall Hydroxypropylmethylcellulose (HPMC), besonders bevorzugt HPMC 2910 als Kapselmaterial eingesetzt.

Werden als Kapselmaterial synthetische Kunststoffe eingesetzt, so sind diese erfindungsgemäß bevorzugt ausgewählt aus der Gruppe bestehend aus Polyethylen Polycarbonat, Polyester, Polypropylen und Polyethylenterephthalat. Besonders bevorzugt sind als synthetische Kunststoffmaterialien für die erfindungsgemäßen Inhalationskapseln Polyethylen, Polycarbonat oder Polyethylenterephthalat. Wird Polyethylen als eines der erfindungsgemäß besonders bevorzugten Kapselmaterialien verwendet, gelangt vorzugsweise Polyethylen mit einer Dichte zwischen 900 und 1000 kg/m3, bevorzugt von 940 - 980 kg/m3 , besonders bevorzugt von etwa 960 - 970 kg/m3 (high-density Polyethylen) zur Anwendung.

Die synthetischen Kunststoffe im Sinne der Erfindung können vielseitig mittels dem im Stand der Technik bekannten Herstellverfahren verarbeitet werden. Bevorzugt im Sinne der Erfindung wird die spritzgusstechnische Verarbeitung der Kunststoffe. Besonders bevorzugt wird die Spritzgusstechnik unter Verzicht auf die Verwendung von Formtrennmitteln. Dieses Herstellverfahren ist wohldefiniert und durch eine besonders gute Reproduzierbarkeit gekennzeichnet.

Diese Kapseln können bevorzugt etwa 1 bis 20 mg, bevorzugt etwa 3 bis 15 mg, besonders bevorzugt etwa 4 bis 12 mg Inhalationspulver enthalten.

Erfindungsgemäß bevorzugte Formulierungen enthalten 4 bis 6 mg Inhalationspulver. Von erfindungsgemäß gleichrangiger Bedeutung sind Inhalationskapseln, die die die erfindungsgemäßen Formulierungen in einer Menge von 8 bis 12 mg enthalten.

Die Wirkstoffe, die in den pulverförmigen Medikamenten enthalten sein können, sind vorzugsweise ausgewählt aus der Gruppe der Betamimetika, Anticholinergika, Corticosteroide, PDE4-Inhibitoren, LTD4-Antagonisten, EGFR-Hemmer, Dopamin-Agonisten, H1-Antihistaminika, PAF-Antagonisten und PI3-Kinase Inhibitoren.

Als Betamimetika gelangen hierbei vorzugsweise Verbindungen zur Anwendung, die ausgewählt sind aus der Gruppe bestehend aus Albuterol, Arformoterol, Bambuterol, Bitolterol, Broxaterol, Carbuterol, Clenbuterol, Fenoterol, Formoterol, Hexoprenaline, Ibuterol, Isoetharine, Isoprenaline, Levosalbutamol, Mabuterol, Meluadrine, Metaproterenol, Orciprenaline, Pirbuterol, Procaterol, Reproterol, Rimiterol, Ritodrine, Salmefamol, Salmeterol, Soterenol, Sulphonterol, Terbutaline, Tiaramide, Tolubuterol, Zinterol, CHF-1035, HOKU-81, KUL-1248, 3-(4-{6-[2-Hydroxy-2-(4-hydroxy-3-hydroxymethyl-phenyl)-ethylamino]-hexyloxy}-butyl)-benzyl-sulfonamid, 5-[2-(5,6-Diethyl-indan-2-ylamino)-1-hydroxy-ethyl]-8-hydroxy-1H-quinolin-2-on, 4-Hydroxy-7-[2-{[2-{[3-(2-phenylethoxy)propyl]sulphonyl}ethyl]-amino}ethyl]-2(3H)-benzothiazolon, 1-(2-Fluor-4-hydroxyphenyl)-2-[4-(1-benzimidazolyl)-2-methyl-2-butylamino]ethanol, 1-[3-(4-Methoxybenzyl-amino)-4-hydroxyphenyl]-2-[4-(1-benzimidazolyl)-2-methyl-2-butylamino]ethanol, 1-[2H-5-hydroxy-3-oxo-4H-1,4-benzoxazin-8-yl]-2-[3-(4-N,N-dimethylaminophenyl)-2-methyl-2-propylamino]ethanol, 1-[2H-5-hydroxy-3-oxo-4H-1,4-benzoxazin-8-yl]-2-[3-(4-methoxyphenyl)-2-methyl-2-propylamino]ethanol, 1-[2H-5-hydroxy-3-oxo-4H-1,4-benzoxazin-8-yl]-2-[3-(4-n-butyloxyphenyl)-2-methyl-2-propylamino]ethanol, 1-[2H-5-hydroxy-3-oxo-4H-1,4-benzoxazin-8-yl]-2-{4-[3-(4-methoxyphenyl)-1,2,4-triazol-3-yl]-2-methyl-2-butylamino}ethanol, 5-Hydroxy-8-(1-hydroxy-2-isopropylaminobutyl)-2H-1,4-benzoxazin-3-(4H)-on, 1-(4-Amino-3-chlor-5-trifluormethylphenyl)-2-tert.-butylamino)ethanol, 6-Hydroxy-8-{1-hydroxy-2-[2-(4-methoxy-phenyl)-1,1-dimethyl-ethylamino]-ethyl}-4H-benzo[1,4]oxazin-3-on, 6-Hydroxy-8-{1-hydroxy-2-[2-(4-phenoxy-essigsäureethylester)-1,1-dimethyl-ethylamino]-ethyl}-4H-benzo[1,4]oxazin-3-on, 6-Hydroxy-8-{1-hydroxy-2-[2-(4-phenoxy-essigsäure)-1,1-dimethyl-ethylamino]-ethyl}-4H-benzo[1,4]oxazin-3-on, 8-{2-[1,1-Dimethyl-2-(2,4,6-trimethylphenyl)-ethylamino]-1-hydroxy-ethyl}-6-hydroxy-4H-benzo[1,4]oxazin-3-on, 6-Hydroxy-8-{1-hydroxy-2-[2-(4-hydroxy-phenyl)-1,1-dimethyl-ethylamino]-ethyl}-4H-benzo[1,4]oxazin-3-on, 6-hydroxyl-8-{1-hydroxy-2-[2-(4-isopropyl-phenyl)-1,1dimethyl-ethylamino]-ethyl}-4H-benzo[1,4]oxazin-3-on, 8-{2-[2-(4-Ethyl-phenyl)-1,1-dimethyl-ethylamino]-1-hydroxy-ethyl}-6-hydroxy-4H-benzo[1,4]oxazin-3-on, 8-{2-[2-(4-Ethoxyphenyl)-1,1-dimethyl-ethylamino]-1-hydroxy-ethyl}-6-hydroxy-4H-benzo[1,4]oxazin-3-on, 4-(4-{2-[2-Hydroxy-2-(6-hydroxy-3-oxo-3,4-dihydro-2H-benzo[1,4]oxazin-8-yl)-ethylamino]-2-methyl-propyl}-phenoxy)-buttersäure, 8-{2-[2-(3,4-Difluor-phenyl)-1,1-dimethyl-ethylamino]-1-hydroxyethyl}-6-hydroxy-4H-benzo[1,4]oxazin-3-on, 1-(4-Ethoxy-carbonylamino-3-cyano-5-fluorophenyl)-2-(tert.-butylamino)ethanol, 2-Hydroxy-5-(1-hydroxy-2-{2-[4-(2-hydroxy-2-phenyl-ethylamino)-phenyl]-ethylamino}-ethyl)-benzaldehyd, N-[2-Hydroxy-5-(1-hydroxy-2-{2-[4-(2-hydroxy-2-phenyl-ethylamino)-phenyl]-ethylamino}-ethyl)-phenyl]-formamid, 8-Hydroxy-5-(1-hydroxy-2-{2-[4-(6-methoxy-biphenyl-3-ylamino)-phenyl]-ethylamino}-ethyl)-1H-quinolin-2-on, 8-Hydroxy-5-[1-hydroxy-2-(6-phenethylamino-hexylamino)-ethyl]-1H-quinolin-2-on, 5-[2-(2-{4-[4-(2-Amino-2-methyl-propoxy)-phenylamino]-phenyl}-ethylamino)-1-hydroxy-ethyl]-8-hydroxy-1H-quinolin-2-on, [3-(4-{6-[2-Hydroxy-2-(4-hydroxy-3-hydroxymethyl-phenyl)-ethylamino]-hexyloxy}-butyl)-5-methyl-phenyl]-harnstoff, 4-(2-{6-[2-(2,6-Dichloro-benzyloxy)-ethoxy]-hexylamino}-1-hydroxy-ethyl)-2-hydroxymethyl-phenol, 3-(4-{6-[2-Hydroxy-2-(4-hydroxy-3-hydroxymethyl-phenyl)-ethylamino]-hexyloxy}-butyl)-benzylsulfonamid, 3-(3-{7-[2-Hydroxy-2-(4-hydroxy-3-hydroxymethyl-phenyl)-ethylamino]-heptyloxy}-propyl)-benzylsulfonamid, 4-(2-{6-[4-(3-Cyclopentanesulfonyl-phenyl)-butoxy]-hexylamino}-1-hydroxy-ethyl)-2-hydroxymethyl-phenol, N-Adamantan-2-yl-2-(3-{2-[2-hydroxy-2-(4-hydroxy-3-hydroxymethyl-phenyl)-ethylamino]-propyl}-phenyl)-acetamid, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze der Betamimetika ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat.

Als Anticholinergika gelangen hierbei vorzugsweise Verbindungen zur Anwendung, die ausgewählt sind aus der Gruppe bestehend aus Tiotropiumsalzen, bevorzugt das Bromidsalz, Oxitropiumsalzen, bevorzugt das Bromidsalz, Flutropiumsalzen, bevorzugt das Bromidsalz, Ipratropiumsalzen, bevorzugt das Bromidsalz, Glycopyrroniumsalzen, bevorzugt das Bromidsalz, Trospiumsalzen, bevorzugt das Chloridsalz, Tolterodin und Aclidinium, bevorzugt als Bromidsalz.

Weitere bevorzugt einsetzbare Anticholinergika sind ausgewählt aus der Gruppe bestehend aus 2,2-Diphenylpropionsäuretropenolester-Methobromid, 2,2-Diphenylpropionsäurescopinester-Methobromid, 2-Fluor-2,2-Diphenylessigsäurescopinester-Methobromid, 2-Fluor-2,2-Diphenylessigsäure-tropenolester-Methobromid, 3,3',4,4'-Tetrafluorbenzilsäuretropenolester-Methobromid, 3,3',4,4'-Tetrafluorbenzilsäurescopinester-Methobromid , 4,4'-Difluorbenzilsäuretropenolester-Methobromid , 4,4'-Difluorbenzilsäurescopinester-Methobromid , 3,3'-Difluorbenzilsäuretropenolester-Methobromid, 3,3'-Difluorbenzilsäurescopinester-Methobromid, 9-Hydroxy-fluoren-9-carbonsäure-tropenolester-Methobromid , 9-Fluor-fluoren-9-carbonsäuretropenolester-Methobromid , 9-Hydroxy-fluoren-9-carbonsäurescopinester-Methobromid , 9-Fluor-fluoren-9-carbonsäurescopinester-Methobromid , 9-Methyl-fluoren-9-carbonsäuretropenolester-Methobromid, 9-Methyl-fluoren-9-carbonsäure-scopinester-Methobromid , Benzilsäurecyclopropyltropinester-Methobromid , 2,2-Diphenylpropionsäurecyclopropyltropinester-Methobromid, 9-Hydroxy-xanthen-9-carbonsäurecyclopropyltropinester-Methobromid , 9-Methyl-fluoren-9-carbonsäurecyclopropyltropinester-Methobromid , 9-Methyl-xanthen-9-carbonsäurecyclopropyltropinester-Methobromid , 9-Hydroxy-fluoren-9-carbonsäurecyclopropyltropinester-Methobromid , 4,4'-Difluorbenzilsäuremethylestercyclopropyltropinester-Methobromid, 9-Hydroxy-xanthen-9-carbonsäuretropenolester-Methobromid , 9-Hydroxy-xanthen-9-carbonsäure-scopinester-Methobromid , 9-Methyl-xanthen-9-carbonsäuretropenolester-Methobromid, 9-Methyl-xanthen-9-carbonsäurescopinester-Methobromid , 9-Ethyl-xanthen-9-carbonsäuretropenolester-Methobromid, 9-Difluormethyl-xanthen-9-carbonsäuretropenolester-Methobromid und 9-Hydroxymethyl-xanthen-9-carbonsäurescopinester-Methobromid. Die vorstehend genannten Methobromide sind im Rahmen der vorliegenden Erfindung auch als Salze einsetzbar, in denen statt des Methobromids, die Salze Metho-X zur Anwendung gelangen, wobei X ausgewählt aus der Gruppe bestehend aus Fluorid, Chlorid, Iodid, Sulfat, Phosphat, Methansulfonat, Nitrat, Maleat, Acetat, Citrat, Fumarat, Tartrat, Oxalat, Succinat, Benzoat und p-Toluolsulfonat sein kann.

Als Corticosteroide gelangen hierbei vorzugsweise Verbindungen zur Anwendung, die ausgewählt sind aus der Gruppe bestehend aus Beclomethason, Betamethason, Budesonid, Butixocort, Ciclesonid, Deflazacort, Dexamethason, Etiprednol, Flunisolid, Fluticason, Loteprednol, Mometason, Prednisolon, Prednison, Rofleponid, Triamcinolon, RPR-106541, NS-126, ST-26, 6,9-Difluor-17-[(2-furanylcarbonyl)oxy]-11-hydroxy-16-methyl-3-oxo-androsta-1,4-dien-17-carbothionsäure (S)-fluoromethylester, 6,9-Difluor-11-hydroxy-16-methyl-3-oxo-17-propionyloxy-androsta-1,4-dien-17-carbothionsäure (S)-(2-oxo-tetrahydro-furan-3S-yl)ester und 6α,9α-difluoro-11β-hydroxy-16α-methyl-3-oxo-17α-(2,2,3,3-tertamethylcyclopropylcarbonyl)oxy-androsta-1,4-diene-17β-carbonsäure cyanomethyl ester, gegebenenfalls in Form ihrer Racemate, Enantiomere oder Diastereomere und gegebenenfalls in Form ihrer Salze und Derivate, ihrer Solvate und/oder Hydrate. Jede Bezugnahme auf Steroide schließt eine Bezugnahme auf deren gegebenenfalls existierende Salze oder Derivate, Hydrate oder Solvate mit ein. Beispiele möglicher Salze und Derivate der Steroide können sein: Alkalisalze, wie beispielsweise Natrium- oder Kaliumsalze, Sulfobenzoate, Phosphate, Isonicotinate, Acetate, Dichloroacetate, Propionate, Dihydrogenphosphate, Palmitate, Pivalate oder auch Furoate.

Als PDE4-Inhibitoren gelangen hierbei vorzugsweise Verbindungen zur Anwendung, die ausgewählt sind aus der Gruppe bestehend aus Enprofyllin, Theophyllin, Roflumilast, Ariflo (Cilomilast), Oglemilast, Tofimilast, Pumafentrin, Lirimilast, Arofyllin, Atizoram, D-4418, Bay-198004, BY343, CP-325,366, D-4396 (Sch-351591), AWD-12-281 (GW-842470), NCS-613, CDP-840, D-4418, PD-168787, T-440, T-2585, V-11294A, Cl-1018, CDC-801, CDC-3052, D-22888, YM-58997, Z-15370, N-(3,5-Dichloro-1-oxo-pyridin-4-yl)-4-difluormethoxy-3-cyclopropylmethoxybenzamid, (-)p-[(4aR*,10bS*)-9-Ethoxy-1,2,3,4,4a,10b-hexahydro-8-methoxy-2-methylbenzo[s] [1,6] naphthyridin-6-yl]-N,N-diisopropylbenzamid, (R)-(+)-1-(4-Brombenzyl)-4-[(3-cyclopentyloxy)-4-methoxyphenyl]-2-pyrrolidon, 3-(Cyclopentyloxy-4-methoxyphenyl)-1-(4-N'-[N-2-cyano-S-methyl-isothioureido]benzyl)-2-pyrrolidon, cis[4-Cyano-4-(3-cyclopentyloxy-4-methoxyphenyl)cyclohexan-1-carbonsäure], 2-carbomethoxy-4-cyano-4-(3-cyclopropylmethoxy-4-difluoromethoxyphenyl)cyclohexan-1-on, cis[4-Cyano-4-(3-cyclopropylmethoxy-4-difluormethoxyphenyl)cyclohexan-1-ol],

(R)-(+)-Ethyl[4-(3-cyclopentyloxy-4-methoxyphenyl)pyrrolidin-2-yliden]acetat, (S)-(-)-Ethyl[4-(3-cyclopentyloxy-4-methoxyphenyl)pyrrolidin-2-yliden]acetat, 9-Cyclopentyl-5,6-dihydro-7-ethyl-3-(2-thienyl)-9H-pyrazolo[3,4-c]-1,2,4-triazolo[4,3-a]pyridin und 9-Cyclopentyl-5,6-dihydro-7-ethyl-3-(tert-butyl)-9H-pyrazolo[3,4-c]-1,2,4-triazolo[4,3-a]pyridin, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat.

Als LTD4-Antagonisten gelangen hierbei vorzugsweise Verbindungen zur Anwendung, die ausgewählt sind aus der Gruppe bestehend aus Montelukast, Pranlukast, Zafirlukast, MCC-847 (ZD-3523), MN-001, MEN-91507 (LM-1507), VUF-5078, VUF-K-8707, L-733321, 1-(((R)-(3-(2-(6,7-Difluor-2-quinolinyl)ethenyl)phenyl)-3-(2-(2- hydroxy-2-propyl)phenyl)thio)-methylcyclopropan-essigsäure, 1-(((1(R)-3(3-(2-(2,3-Dichlorthieno[3,2-b]pyridin-5-y1)-(E)-ethenyl)phenyl)-3-(2-(1-hydroxy-1-methylethyl)phenyl)-propyl)thio)methyl)cyclopropanessigsäure und [2-[[2-(4-tert-Butyl-2-thiazolyl)-5-benzofuranyl]oxymethyl]phenyl]essigsäure, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat. Unter Salzen oder Derivaten zu deren Bildung die LTD4-Antagonisten gegebenenfalls in der Lage sind, werden beispielsweise verstanden: Alkalisalze, wie beispielsweise Natrium- oder Kaliumsalze, Erdalkalisalze, Sulfobenzoate, Phosphate, Isonicotinate, Acetate, Propionate, Dihydrogenphosphate, Palmitate, Pivalate oder auch Furoate.

Als EGFR-Hemmer gelangen hierbei vorzugsweise Verbindungen zur Anwendung, die ausgewählt sind aus der Gruppe bestehend aus Cetuximab, Trastuzumab, ABX-EGF, Mab ICR-62, 4-[(3-Chlor-4-fluorphenyl)amino]-6-{[4-(morpholin-4-yl)-1-oxo-2-buten-1-yl]amino}-7-cyclopropylmethoxy-chinazolin, 4-[(3-Chlor-4-fluorphenyl)amino]-6-{[4-(N,N-diethylamino)-1-oxo-2-buten-1-yl]amino}-7-cyclopropylmethoxy-chinazolin, 4-[(3-Chlor-4-fluorphenyl)amino]-6-{[4-(N,N-dimethylamino)-1-oxo-2-buten-1-yl]amino}-7-cyclopropylmethoxy-chinazolin, 4-[(R)-(1-Phenyl-ethyl)amino]-6-{[4-(morpholin-4-yl)-1-oxo-2-buten-1-yl]amino}-7-cyclopentyloxy-chinazolin, 4-[(3-Chlor-4-fluorphenyl)amino]-6-{[4-((R)-6-methyl-2-oxo-morpholin-4-yl)-1-oxo-2-buten-1-yl]amino}-7-cyclopropylmethoxy-chinazolin, 4-[(3-Chlor-4-fluor-phenyl)amino]-6-([4-((R)-6-methyl-2-oxo-morpholin-4-yl)-1-oxo-2-buten-1-yl]amino)-7-[(S)-(tetrahydrofuran-3-yl)oxy]-chinazolin, 4-[(3-Chlor-4-fluor-phenyl)amino]-6-{[4-((R)-2-methoxymethyl-6-oxo-morpholin-4-yl)-1-oxo-2-buten-1-yl]amino}-7-cyclopropylmethoxy-chinazolin, 4-[(3-Chlor-4-fluor-phenyl)amino]-6-[2-((S)-6-methyl-2-oxo-morpholin-4-yl)-ethoxy]-7-methoxy-chinazolin, 4-[(3-Chlor-4-fluorphenyl)amino]-6-({4-[N-(2-methoxy-ethyl)-N-methyl-amino]-1-oxo-2-buten-1-yl}amino)-7-cyclopropylmethoxy-chinazolin, 4-[(3-Chlor-4-fluorphenyl)amino]-6-{[4-(N,N-dimethylamino)-1-oxo-2-buten-l-yl]amino}-7-cyclopentyloxy-chinazolin, 4-[(R)-(1-Phenyl-ethyl)amino]-6-{[4-(N,N-bis-(2-methoxy-ethyl)-amino)-1-oxo-2-buten-1-yl]amino}-7-cyclopropylmethoxy-chinazolin, 4-[(R)-(1-Phenyl-ethyl)amino]-6-({4-[N-(2-methoxy-ethyl)-N-ethyl-amino]-1-oxo-2-buten-1-yl}amino)-7-cyclopropylmethoxy-chinazolin, 4-[(R)-(1-Phenyl-ethyl)amino]-6-({4-[N-(2-methoxy-ethyl)-N-methyl-amino]-1-oxo-2-buten-1-yl}amino)-7-cyclopropylmethoxy-chinazolin, 4-[(R)-(1-Phenylethyl)amino]-6-({4-[N-(tetrahydropyran-4-yl)-N-methyl-amino]-1-oxo-2-buten-1-yl}amino)-7-cyclopropylmethoxy-chinazolin, 4-[(3-Chlor-4-fluorphenyl)amino]-6-{[4-(N,N-dimethylamino)-1-oxo-2-buten-1-yl]amino}-7-((R)-tetrahydrofuran-3-yloxy)-chinazolin, 4-[(3-Chlor-4-fluorphenyl)amino]-6-{[4-(N,N-dimethylamino)-1-oxo-2-buten-1-yl]amino}-7-((S)-tetrahydrofuran-3-yloxy)-chinazolin, 4-[(3-Chlor-4-fluorphenyl)amino]-6-({4-[N-(2-methoxyethyl)-N-methyl-amino]-1-oxo-2-buten-1-yl}amino)-7-cyclopentyloxy-chinazolin, 4-[(3-Chlor-4-fluorphenyl)amino]-6-{[4-(N-cyclopropyl-N-methyl-amino)-1-oxo-2-buten-1-yl]amino}-7-cyclopentyloxy-chinazolin, 4-[(3-Chlor-4-fluorphenyl)amino]-6-{[4-(N,N-dimethylamino)-1-oxo-2-buten-1-yl]amino}-7-[(R)-(tetrahydrofuran-2-yl)methoxy]-chinazolin, 4-[(3-Chlor-4-fluorphenyl)amino]-6-{[4-(N,N-dimethylamino)-1-oxo-2-buten-1-yl]amino}-7-[(S)-(tetrahydrofuran-2-yl)methoxy]-chinazolin, 4-[(3-Ethinyl-phenyl)amino]-6,7-bis-(2-methoxy-ethoxy)-chinazolin, 4-[(3-Chlor-4-fluorphenyl)amino]-7-[3-(morpholin-4-yl)-propyloxy]-6-[(vinylcarbonyl)amino]-chinazolin, 4-[(R)-(1-Phenyl-ethyl)amino]-6-(4-hydroxy-phenyl)-7H-pyrrolo[2,3-d]pyrimidin, 3-Cyano-4-[(3-chlor-4-fluorphenyl)amino]-6-{[4-(N,N-dimethylamino)-1-oxo-2-buten-1-yl]amino}-7-ethoxy-chinolin, 4-{[3-Chlor-4-(3-fluor-benzyloxy)-phenyl]amino}-6-(5-{[(2-methansulfonyl-ethyl)amino]methyl}-furan-2-yl)chinazolin; 4-[(R)-(1-Phenyl-ethyl)amino]-6-{[4-((R)-6-methyl-2-oxo-morpholin-4-yl)-1-oxo-2-buten-1-yl]amino}-7-methoxy-chinazolin, 4-[(3-Chlor-4-fluorphenyl)amino]-6-{[4-(morpholin-4-yl)-1-oxo-2-buten-1-yl]amino}-7-[(tetrahydrofuran-2-yl)methoxy]-chinazolin, 4-[(3-Chlor-4-fluorphenyl)amino]-6-({4-[N,N-bis-(2-methoxy-ethyl)-amino]-1-oxo-2-buten-1-yl}amino)-7-[(tetrahydrofuran-2-yl)methoxy]-chinazolin, 4-[(3-Ethinyl-phenyl)amino]-6-{[4-(5,5-dimethyl-2-oxo-morpholin-4-yl)-1-oxo-2-buten-1-yl]amino}-chinazolin, 4-[(3-Chlor-4-fluor-phenyl)amino]-6-[2-(2,2-dimethyl-6-oxo-morpholin-4-yl)-ethoxy]-7-methoxy-chinazolin, 4-[(3-Chlor-4-fluor-phenyl)amino]-6-[2-(2,2-dimethyl-6-oxo-morpholin-4-yl)-ethoxy]-7-[(R)-(tetrahydrofuran-2-yl)methoxy]-chinazolin, 4-[(3-Chlor-4-fluor-phenyl)amino]-7-[2-(2,2-dimethyl-6-oxo-morpholin-4-yl)-ethoxy]-6-[(S)-(tetrahydrofuran-2-yl)methoxy]-chinazolin, 4-[(3-Chlor-4-fluor-phenyl)amino]-6-{2-[4-(2-oxo-morpholin-4-yl)-piperidin-1-yl]-ethoxy}-7-methoxy-chinazolin, 4-[(3-Chlor-4-fluorphenyl)amino]-6-[1-(tert.-butyloxycarbonyl)-piperidin-4-yloxy]-7-methoxy-chinazolin, 4-[(3-Chlor-4-fluor-phenyl)amino]-6-(trans-4-amino-cyclohexan-1-yloxy)-7-methoxy-chinazolin, 4-[(3-Chlor-4-fluor-phenyl)amino]-6-(trans-4-methansulfonylamino-cyclohexan-1-yloxy)-7-methoxy-chinazolin, 4-[(3-Chlor-4-fluor-phenyl)amino]-6-(tetrahydropyran-3-yloxy)-7-methoxy-chinazolin, 4-[(3-Chlor-4-fluor-phenyl)amino]-6-(1-methyl-piperidin-4-yloxy)-7-methoxy-chinazolin, 4-[(3-Chlor-4-fluor-phenyl)amino]-6-{1-[(morpholin-4-yl)carbonyl]-piperidin-4-yloxy}-7-methoxy-chinazolin, 4-[(3-Chlor-4-fluor-phenyl)amino]-6-{1-[(methoxymethyl)carbonyl]-piperidin-4-yloxy}-7-methoxy-chinazolin, 4-[(3-Chlor-4-fluor-phenyl)amino]-6-(piperidin-3-yloxy)-7-methoxy-chinazolin, 4-[(3-Chlor-4-fluor-phenyl)amino]-6-[1-(2-acetylamino-ethyl)-piperidin-4-yloxy]-7-methoxy-chinazolin, 4-[(3-Chlor-4-fluor-phenyl)amino]-6-(tetrahydropyran-4-yloxy)-7-ethoxy-chinazolin, 4-[(3-Chlor-4-fluor-phenyl)amino]-6-((S)-tetrahydrofuran-3-yloxy)-7-hydroxy-chinazolin, 4-[(3-Chlor-4-fluorphenyl)amino]-6-(tetrahydropyran-4-yloxy)-7-(2-methoxy-ethoxy)-chinazolin, 4-[(3-Chlor-4-fluor-phenyl)amino]-6-{trans-4-[(dimethylamino)sulfonylamino]-cyclohexan-1-yloxyl-7-methoxy-chinazolin, 4-[(3-Chlor-4-fluor-phenyl)amino]-6-{trans-4-[(morpholin-4-yl)carbonylamino]-cyclohexan-1-yloxy}-7-methoxy-chinazolin, 4-[(3-Chlor-4-fluor-phenyl)amino]-6-{trans-4-[(morpholin-4-yl)sulfonylamino]-cyclohexan-1-yloxy}-7-methoxy-chinazolin, 4-[(3-Chlor-4-fluor-phenyl)amino]-6-(tetrahydropyran-4-yloxy)-7-(2-acetylamino-ethoxy)-chinazolin, 4-[(3-Chlor-4-fluor-phenyl)amino]-6-(tetrahydropyran-4-yloxy)-7-(2-methansulfonylamino-ethoxy)-chinazolin, 4-[(3-Chlor-4-fluor-phenyl)amino]-6-{1-[(piperidin-1-yl)carbonyl]-piperidin-4-yloxy}-7-methoxy-chinazolin, 4-[(3-Chlor-4-fluor-phenyl)amino]-6-(1-aminocarbonylmethyl-piperidin-4-yloxy)-7-methoxy-chinazolin, 4-[(3-Chlor-4-fluor-phenyl)amino]-6-(cis-4-{N-[(tetrahydropyran-4-yl)carbonyl]-N-methyl-amino}-cyclohexan-1-yloxy)-7-methoxy-chinazolin, 4-[(3-Chlor-4-fluor-phenyl)amino]-6-(cis-4-{N-[(morpholin-4-yl)carbonyl]-N-methyl-amino}-cyclohexan-1-yloxy)-7-methoxy-chinazolin, 4-[(3-Chlor-4-fluor-phenyl)amino]-6-(cis-4-{N-[(morpholin-4-yl)sulfonyl]-N-methyl-amino}-cyclohexan-1-yloxy)-7-methoxy- chinazolin, 4-[(3-Chlor-4-fluor-phenyl)amino]-6-(trans-4-ethansulfonylamino-cyclohexan-1-yloxy)-7-methoxy-chinazolin, 4-[(3-Chlor-4-fluor-phenyl)amino]-6-(1-methansulfonyl-piperidin-4-yloxy)-7-ethoxy-chinazolin, 4-[(3-Chlor-4-fluorphenyl)amino]-6-(1-methansulfonyl-piperidin-4-yloxy)-7-(2-methoxy-ethoxy)-chinazolin, 4-[(3-Chlor-4-fluor-phenyl)amino]-6-[1-(2-methoxy-acetyl)-piperidin-4-yloxy]-7-(2-methoxy-ethoxy)-chinazolin, 4-[(3-Chlor-4-fluorphenyl)amino]-6-(cis-4-acetylamino-cyclohexan-1-yloxy)-7-methoxy-chinazolin, 4-[(3-Ethinyl-phenyl)amino]-6-[1-(tert-butyloxycarbonyl)-piperidin-4-yloxy]-7-methoxy-chinazolin, 4-[(3-Ethinyl-phenyl)amino]-6-(tetrahydropyran-4-yloxy]-7-methoxy-chinazolin, 4-[(3-Chlor-4-fluor-phenyl)amino]-6-(cis-4-{N-[(piperidin-1-yl)carbonyl]-N-methyl-amino}-cyclohexan-1-yloxy)-7-methoxy-chinazolin, 4-[(3-Chlor-4-fluor-phenyl)amino]-6-(cis-4-{N-[(4-methyl-piperazin-1-yl)carbonyl]-N-methyl-amino}-cyclohexan-1-yloxy)-7-methoxy-chinazolin, 4-[(3-Chlor-4-fluor-phenyl)amino]-6-{cis-4-[(morpholin-4-yl)carbonylamino]-cyclohexan-1-yloxy}-7-methoxy-chinazolin, 4-[(3-Chlor-4-fluor-phenyl)amino]-6-{1-[2-(2-oxopyrrolidin-1-yl)ethyl]-piperidin-4-yloxy}-7-methoxy-chinazolin, 4-[(3-Chlor-4-fluor-phenyl)amino]-6-{1-[(morpholin-4-yl)carbonyl]-piperidin-4-yloxy}-7-(2-methoxy-ethoxy)-chinazolin, 4-[(3-Ethinyl-phenyl)amino]-6-(1-acetyl-piperidin-4-yloxy)-7-methoxy-chinazolin, 4-[(3-Ethinyl-phenyl)amino]-6-(1-methyl-piperidin-4-yloxy)-7-methoxy-chinazolin, 4-[(3-Ethinyl-phenyl)amino]-6-(1-methansulfonyl-piperidin-4-yloxy)-7-methoxy-chinazolin, 4-[(3-Chlor-4-fluor-phenyl)amino]-6-(1-methyl-piperidin-4-yloxy)-7(2-methoxy-ethoxy)-chinazolin, 4-[(3-Chlor-4-fluor-phenyl)amino]-6-(1-isopropyloxycarbonyl-piperidin-4-yloxy)-7-methoxy-chinazolin, 4-[(3-Chlor-4-fluor-phenyl)amino]-6-(cis-4-methylamino-cyclohexan-1-yloxy)-7-methoxy-chinazolin, 4-[(3-Chlor-4-fluor-phenyl)amino]-6-{cis-4-[N-(2-methoxy-acetyl)-N-methyl-amino]-cyclohexan-1-yloxy}-7-methoxy-chinazolin, 4-[(3-Ethinyl-phenyl)amino]-6-(piperidin-4-yloxy)-7-methoxy-chinazolin, 4-[(3-Ethinyl-phenyl)amino]-6-[1-(2-methoxy-acetyl)-piperidin-4-yloxy]-7-methoxy-chinazolin, 4-[(3-Ethinyl-phenyl)amino]-6-{1-[(morpholin-4-yl)carbonyl]-piperidin-4-yloxy}-7-methoxy-chinazolin, 4-[(3-Chlor-4-fluor-phenyl)amino]-6-{1-[(cis-2,6-dimethyl-morpholin-4-yl)carbonyl]-piperidin-4-yloxy}-7-methoxy-chinazolin, 4-[(3-Chlor-4-fluor-phenyl)amino]-6-{1-[(2-methyl-morpholin-4-yl)carbonyl]-piperidin-4-yloxy}-7-methoxy-chinazolin, 4-[(3-Chlor-4-fluorphenyl)amino]-6-{1-[(S,S)-(2-oxa-5-aza-bicyclo[2.2.1]hept-5-yl)carbonyl]-piperidin-4-yloxy}-7-methoxy-chinazolin, 4-[(3-Chlor-4-fluor-phenyl)amino]-6-{1-[(N-methyl-N-2-methoxyethyl-amino)carbonyl]-piperidin-4-yloxy}-7-methoxy-chinazolin, 4-[(3-Chlor-4-fluor-phenyl)amino]-6-(1-ethyl-piperidin-4-yloxy)-7-methoxy-chinazolin, 4-[(3-Chlor-4-fluor-phenyl)amino]-6-{1-[(2-methoxyethyl)carbonyl]-piperidin-4-yloxy}-7-methoxy-chinazolin, 4-[(3-Chlor-4-fluor-phenyl)amino]-6-{1-[(3-methoxypropyl-amino)-carbonyl]-piperidin-4-yloxy}-7-methoxy-chinazolin, 4-[(3-Chlor-4-fluor-phenyl)amino]-6-[cis-4-(N-methansulfonyl-N-methyl-amino)-cyclohexan-1-yloxy]-7-methoxy-chinazolin, 4-[(3-Chlor-4-fluor-phenyl)amino]-6-[cis-4-(N-acetyl-N-methyl-amino)-cyclohexan-1-yloxy]-7-methoxy-chinazolin, 4-[(3-Chlor-4-fluor-phenyl)amino]-6-(trans-4-methylamino-cyclohexan-1-yloxy)-7-methoxy-chinazolin, 4-[(3-Chlor-4-fluor-phenyl)amino]-6-[trans-4-(N-methansulfonyl-N-methyl-amino)-cyclohexan-1-yloxy]-7-methoxy-chinazolin, 4-[(3-Chlor-4-fluor-phenyl)amino]-6-(trans-4-dimethylamino-cyclohexan-1-yloxy)-7-methoxy-chinazolin, 4-[(3-Chlor-4-fluor-phenyl)amino]-6-(trans-4-{N-[(morpholin-4-yl)carbonyl]-N-methyl-amino}-cyclohexan-1-yloxy)-7-methoxy-chinazolin, 4-[(3-Chlor-4-fluorphenyl)amino]-6-[2-(2,2-dimethyl-6-oxo-morpholin-4-yl)-ethoxy]-7-[(S)-(tetrahydrofuran-2-yl)methoxy]-chinazolin, 4-[(3-Chlor-4-fluor-phenyl)amino]-6-(1-methansulfonyl-piperidin-4-yloxy)-7-methoxy-chinazolin und 4-[(3-Chlor-4-fluor-phenyl)amino]-6-(1-cyano-piperidin-4-yloxy)-7-methoxy-chinazolin, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat.

Als Dopamin-Agonisten gelangen hierbei vorzugsweise Verbindungen zur Anwendung, die ausgewählt sind aus der Gruppe bestehend aus Bromocriptin, Cabergolin, Alpha-Dihydroergocryptin, Lisurid, Pergolid, Pramipexol, Roxindol, Ropinirol, Talipexol, Tergurid und Viozan, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat.

Als H1-Antihistaminika gelangen hierbei vorzugsweise Verbindungen zur Anwendung, die ausgewählt sind aus der Gruppe bestehend aus Epinastin, Cetirizin, Azelastin, Fexofenadin, Levocabastin, Loratadin, Mizolastin, Ketotifen, Emedastin, Dimetinden, Clemastin, Bamipin, Cexchlorpheniramin, Pheniramin, Doxylamin, Chlorphenoxamin, Dimenhydrinat, Diphenhydramin, Promethazin, Ebastin, Desloratidin und Meclozin, gegebenenfalls in Form ihrer Racemate, Enantiomere, Diastereomere und gegebenenfalls in Form ihrer pharmakologisch verträglichen Säureadditionssalze, Solvate oder Hydrate. Erfindungsgemäß bevorzugt sind die Säureadditionssalze ausgewählt aus der Gruppe bestehend aus Hydrochlorid, Hydrobromid, Hydroiodid, Hydrosulfat, Hydrophosphat, Hydromethansulfonat, Hydronitrat, Hydromaleat, Hydroacetat, Hydrocitrat, Hydrofumarat, Hydrotartrat, Hydrooxalat, Hydrosuccinat, Hydrobenzoat und Hydro-p-toluolsulfonat.

## Patentansprüche

1. Verfahren zur Überwachung der Befüllung einer Kapsel mit einem Medikament, wobei die Kapsel oder Kapselteile in Kapselträgern, insbesondere Matrizen gehalten und transportiert und mit einer Füllmasse befüllt werden und wobei die Kontur der Füllmasse mittels eines optischen Systems bildgebend aufgezeichnet und durch eine Bildanalyse eine Bewertung der Befüllung vorgenommen wird, **dadurch gekennzeichnet, dass** im Betrieb der Kapselfüllmaschine während der Befülldurchläufe der aktuelle optische Kennwert eines Kapselträgers, insbesondere Matrizenplatzes aus digitalisierten Bilddaten errechnet wird und in einem nachfolgenden Befülldurchlauf eine Regelung des optischen Systems derart erfolgt, dass die Lichtintensität im Bild des Kapselträgers einen Sollwert annimmt.

2. Verfahren zur Überwachung der Befüllung einer Kapsel mit einem Medikament gemäß Anspruch 1, **dadurch gekennzeichnet, dass** als optischer Kennwert der Kapselträger die Reflektivität oder die Transmission oder eine mittlere Bildhelligkeit erfasst wird.

3. Verfahren zur Überwachung der Befüllung einer Kapsel mit einem Medikament gemäß einem der vorhergehenden Ansprüche, **dadurch gekennzeichnet, dass** die Intensität einer Lichtquelle derart geregelt wird, dass die Lichtintensität einen Sollwert annimmt.

4. Verfahren zur Überwachung der Befüllung einer Kapsel mit einem Medikament gemäß Anspruch 3, **dadurch gekennzeichnet, dass** mittels eines Regelalgorithmus die Spannung einer LED, insbesondere Hochleistungs-LED nachgeregelt wird.

5. Verfahren zur Überwachung der Befüllung einer Kapsel mit einem Medikament gemäß einem der vorhergehenden Ansprüche, **dadurch gekennzeichnet, dass** als Verschlusszeit, insbesondere elektrische Verschlusszeit einer Kamera Werte von 10 Mikrosekunden - 100 Mikrosekunden, bevorzugt 30-70 Mikrosekunden eingestellt werden und/oder dass die elektrische Kanalverstärkung einer Kamera so geregelt wird, so dass die Lichtintensität des aufgezeichneten Bildes einen Sollwert annimmt.

6. Verfahren zur Überwachung der Befüllung einer Kapsel nach einem der vorhergehenden Ansprüche, **dadurch gekennzeichnet, dass** im Auswertungsschritt im zuvor aufgezeichneten Bild die Kontur der im Teil der Kapsel befindlichen Füllmasse ermittelt wird und die Kontur analysiert wird, um eine Bewertung der Befüllung durch Vergleich mit einer vorgegebenen Kontur vorzunehmen und wobei im Auswertungsschritt die aufgezeichnete Konturlinie durch Kurvenanpassung ermittelt und mit der Länge einer im Rechenspeicher hinterlegten Konturlinie verglichen wird.

7. Verfahren zur Überwachung der Befüllung einer Kapsel mit einem Medikament gemäß einem der vorhergehenden Ansprüche, **dadurch gekennzeichnet, dass** bei der Bildanalyse eine Kontraststeigerung vorgenommen und / oder die Grau- bzw. Farbabstufungen des Bildes verringert werden und/oder ausgehend von einem Schwellwert das Bild in ein binäres Bild umgewandelt wird.

8. Verfahren zur maschinellen, fortlaufenden Befüllung von Kapseln mit einem Medikament, wobei jeweils wenigstens ein Teil der Kapsel mit einer vorgegebenen Füllmasse von vorgegebener Kontur aus dem Medikament befüllt wird, **dadurch gekennzeichnet, dass** die optischen Kennwerte jedes Kapselträgers erfasst und in einem elektronischem Zwischenspeicher abgelegt werden und eine Überwachung und Regelung der Befüllung gemäß einem der vorhergehenden Ansprüche 1 - 7 erfolgt und anhand des Ergebnisses der jeweiligen Überwachung gegebenenfalls die Aussortierung der betreffenden Kapsel bzw. des Teils der Kapsel vorgenommen wird.

9. Verfahren zur maschinellen, fortlaufenden Befüllung von Kapseln mit einem Medikament gemäß dem vorhergehenden Anspruch, wobei das die Füllmasse bildende Medikament pulverförmig ist und wobei die Befüllung nach dem Stechheberprinzip erfolgt.

10. Vorrichtung zur Durchführung der vorhergehenden Verfahren 1 bis 9, umfassend eine Kapselfüllmaschine, ein optisches System zur Aufzeichnung der Bilddaten von befüllten Kapseln und ein Bildanalysesystem, insbesondere einen Analyserechner, **dadurch gekennzeichnet, dass** die Vorrichtung weiterhin eine per Bus mit dem Rechner verbundene SPS mit einem adressierbaren Register zur Ablage der Steuerwerte für das optische System aufweist.

11. Vorrichtung gemäß dem vorhergehenden Anspruch, **dadurch gekennzeichnet, dass** die Vorrichtung eine CCD (4) -Kamera oder einen CMOS-Bildwandler mit einer Bildwiederholfrequenz von 10 Hertz - 1000 Hertz und einer Verschlusszeit von 10 Mikrosekunden - 100 Millisekunden umfasst.

12. Vorrichtung gemäß einem der beiden vorhergehenden Ansprüche, **dadurch gekennzeichnet, dass** die Vorrichtung ein Steuergerät, insbesondere eine per SPS ansteuerbare Spannungsquelle zur Einstellung der Diodenspannung aufweist.

13. Computerprogramm zur Steuerung eines Verfahrens nach den Ansprüchen 1-9 oder einer Vorrichtung nach den Ansprüchen 10-12, **dadurch gekennzeichnet, dass** das Programm mindestens die Programmschritte
• Auslesen des Bildspeichers einer CCD - Kamera oder eines C-MOS Bildwandlers
• Berechnung des optischen Kennwertes eines Kapselträgers, insbesondere der mittleren integralen Lichtintensität der Bilder einer einzelnen Matrize
• Konvertierung der Grauwert- oder Farbwert Bildmatrizzen in binäre Bildwertmatrizen
• Anwendung eines Auswertealgorithmus auf die Kontur der Füllmasse und Bewertung der Kontur
• Speicherung des Messergebnisses
• Aktivierung eines Auswurfmechanismus bei fehlbefüllten Kapseln umfasst.

14. Computerprogramm nach dem vorhergehenden Ansprüche 13, **dadurch gekennzeichnet, dass** durch das Computerprogramm mittels eines Regelalgorithmus die Spannung der Lichtquelle entsprechend der optischen Kennwerte nachgeregelt wird.

15. Computerprogramm nach einem der vorhergehenden Anspruch 13 oder 14, **dadurch gekennzeichnet, dass** die Kennwerte der optischen Kontrolle mit Kennwerten der Tara Gewichtsmessungen abgeglichen werden.

## Claims

1. Process for monitoring the filling of a capsule with a medicament, wherein the capsule or capsule parts are held and transported in capsule carriers, particularly matrices, and filled with a fill mass, and wherein the contour of the fill mass is recorded by imaging using an optical system, and the filling is evaluated by image analysis, **characterised in that** during operation of the capsule filling machine, during the filling processes, the current optical characteristics of a capsule carrier, particularly a matrix location, is calculated from digitised image data and in a subsequent filling operation the optical system is adjusted such that the light intensity in the image of the capsule carrier assumes a desired value.

2. Process for monitoring the filling of a capsule with a medicament according to Claim 1, **characterised in that** the reflectivity or the transmittance or a mean image brightness is detected as an optical characteristic of the capsule carriers.

3. Process for monitoring the filling of a capsule with a medicament according to one of the preceding claims, **characterised in that** the intensity of a light source is regulated such that the light intensity assumes a desired value.

4. Process for monitoring the filling of a capsule with a medicament according to Claim 3, **characterised in that** the voltage of an LED, particularly a high performance LED, is regulated by means of a regulating algorithm.

5. Process for monitoring the filling of a capsule with a medicament according to one of the preceding claims, **characterised in that** values of 10 microseconds - 100 microseconds, preferably 30-70 microseconds are adjusted as the shutter speed, particularly the electrical shutter speed of a camera, and/or the electrical channel amplification of a camera is regulated so that the light intensity of the image recorded assumes a desired value.

6. Process for monitoring the filling of a capsule according to one of the preceding claims, **characterised in that** in the evaluation step in the image shown previously the contour of the fill mass contained in the part of the capsule is determined and the contour is analysed in order to carry out an evaluation of the filling by comparison with a given contour, and in the evaluation step the contour line recorded is determined by curve fitting and compared with the length of a contour line stored in the computer memory.

7. Process for monitoring the filling of a capsule with a medicament according to one of the preceding claims, **characterised in that** in the image analysis the contrast is increased and/or the grey scale or colour gradations of the image are reduced, and/or the image is converted into a binary image starting from a threshold value.

8. Process for the continuous machine filling of capsules with a medicament, wherein at least part of the capsule is filled with a given fill mass of medicament of a given contour, **characterised in that** the optical characteristics of each capsule carrier are ascertained and stored in an electronic temporary memory and the filling process is monitored and regulated according to one of the preceding claims 1 - 7 and if desired the respective capsule or capsule part is graded according to the results of the particular monitoring.

9. Process for the continuous machine filling of capsules with a medicament according to the preceding claim, wherein the medicament that forms the fill mass is in powder form and the filling is carried out using the pipette technique.

10. Apparatus for carrying out the preceding processes 1 to 9, comprising a capsule filling machine, an optical system for recording the image data of filled capsules and an image analysis system, particularly an analytical computer, **characterised in that** the apparatus further comprises an SPC connected by bus to the computer with an addressable register for storing the control values for the optical system.

11. Apparatus according to the preceding claim, **characterised in that** the apparatus comprises a CCD (4) camera or a CMOS image converter with a refresh rate of 10 Hertz - 1000 Hertz and a shutter speed of 10 microseconds to 100 milliseconds.

12. Apparatus according to one of the two preceding claims, **characterised in that** the apparatus has a control device, particularly a voltage source that can be actuated by SPC for adjusting the diode voltage.

13. Computer programme for controlling a process according to claims 1-9 or an apparatus according to claims 10-12, **characterised in that** the programme encompasses at least the steps of
• reading out the image memory of a CCD camera or a C-MOS image converter
• calculating the optical characteristics of a capsule carrier, particularly the mean integral light intensity of the images of an individual matrix
• converting the grey scale or chrominance image matrices into binary image matrices
• applying an evaluating algorithm to the contour of the fill mass and quantifying the contour
• storing the measured value
• activating an ejector mechanism for defectively filled capsules.

14. Computer programme according to the preceding Claim 13, **characterised in that** the voltage of the light source is adjusted by the computer programme in accordance with the optical characteristics using a regulating algorithm.

15. Computer programme according to one of the preceding claims 13 or 14, **characterised in that** the characteristics of the optical control are compared with characteristics of the tare weight measurements.

## Revendications

1. Procédé pour contrôler le remplissage d'une capsule avec un médicament, où les capsules ou parties de capsule sont maintenues et transportées dans un support de capsule, en particulier une matrice, et remplies avec une masse de remplissage et où le contour de la masse de remplissage est **caractérisé par** sa forme à l'aide d'un système optique et par une analyse d'image, on procède à une évaluation du remplissage, **caractérisé en ce que** pendant le fonctionnement de la machine de remplissage des capsules pendant le déroulement du remplissage, la valeur optique actuelle d'un support de capsule, en particulier une place de matrice, est calculée à partir de données d'image digitalisées et pendant un remplissage suivant, un réglage du système optique est réalisé de sorte que l'intensité de lumière dans l'image du support de capsule adopte une valeur recherchée.

2. Procédé pour contrôler le remplissage d'une capsule avec un médicament selon la revendication 1, **caractérisé en ce que** comme valeur optique du support de capsule, on utilise la réflectivité ou la transmission ou une intensité lumineuse moyenne de l'image.

3. Procédé pour contrôler le remplissage d'une capsule avec un médicament selon l'une des revendications précédentes, **caractérisé en ce que** l'intensité d'une source de lumière est réglée de sorte que l'intensité de la lumière prenne une valeur recherchée.

4. Procédé pour contrôler le remplissage d'une capsule avec un médicament selon la revendication 3, **caractérisé en ce que**, à l'aide d'un algorithme de réglage, la tension d'un LED, en particulier un LED à haute puissance, est réglée.

5. Procédé pour contrôler le remplissage d'une capsule avec un médicament selon l'une des revendications précédentes, **caractérisé en ce que** comme temps de fermeture, en particulier temps de fermeture électrique d'un appareil photographique, on ajuste des valeurs de 10 microsecondes - 100 microsecondes, de préférence 30-70 microsecondes et/ou **en ce que** le gain électrique du canal d'un appareil photographique est réglé de sorte que l'intensité de la lumière de l'image **caractérisée** prend une valeur recherchée.

6. Procédé pour contrôler le remplissage d'une capsule avec un médicament selon l'une des revendications précédentes, **caractérisé en ce que** dans l'étape d'évaluation de l'image précédemment **caractérisée**, le contour de la masse de remplissage se trouvant dans une partie de capsule est déterminé et analysé, pour procéder à une évaluation du remplissage par comparaison à un contour précédent et où dans l'étape d'évaluation, la ligne de contour **caractérisée** est déterminée par ajustement de courbe et comparée à la longueur d'une ligne de contour conservée en mémoire.

7. Procédé pour contrôler le remplissage d'une capsule avec un médicament selon l'une des revendications précédentes, **caractérisé en ce que** lors de l'analyse d'image, on procède à une augmentation du contraste et/ou on diminue les niveaux de gris et respectivement, dégradés de l'image et/ou partant d'une valeur seuil, on transforme l'image en une image binaire.

8. Procédé pour le remplissage continu, automatisé de capsules avec un médicament, où chaque fois, au moins une partie de capsule est remplie avec une masse de remplissage donnée d'un contour donné, comprenant le médicament, **caractérisé en ce que** les valeurs optiques de chaque support de capsules sont saisies et enregistrées dans une mémoire électronique, et un contrôle et un réglage du remplissage selon l'une des revendications 1 - 7 précédentes est réalisé et à l'aide des résultats de chaque contrôle, le cas échéant, on procède à un tri des capsules et respectivement, parties de capsule concernées.

9. Procédé pour le remplissage continu, automatisé de capsules avec un médicament selon la revendication précédente, où le médicament formant la masse de remplissage est pulvérulent et où le remplissage est réalisé selon le principe de la pipette.

10. Dispositif pour réaliser le procédé précédent 1 à 9, comprenant une machine de remplissage de capsules, un système optique pour caractériser les données d'image des capsules remplies et un système d'analyse d'image, en particulier un calculateur d'analyse, **caractérisé en ce que** le dispositif présente en outre, un SPS relié par bus au calculateur, avec un registre adressable pour l'archivage des valeurs de réglage pour le système optique.

11. Dispositif selon la revendication précédente, **caractérisé en ce que** le dispositif comprend un appareil photographique CCD (4) ou un convertisseur d'image CMOS avec une fréquence de rafraichissement de 10 Hz - 1000 Hz et un temps de fermeture de 10 microsecondes - 100 microsecondes.

12. Dispositif selon l'une des deux revendications précédentes, **caractérisé en ce que** le dispositif présente un appareil de réglage, en particulier une source de tension réglable par SPS pour l'ajustement de la tension des diodes.

13. Programme d'ordinateur pour le réglage d'un procédé selon l'une des revendications 1-9 ou d'un dispositif selon les revendications 10-12, **caractérisé en ce que** le programme comprend au moins les étapes suivantes :
- lecture de la mémoire d'un appareil photographique CCD ou d'un convertisseur d'image C-MOS,
- calcul des valeurs optiques d'un support de capsule, en particulier de l'intensité de lumière intégrale moyenne de l'image d'une matrice individuelle,
- conversion des valeurs de gris ou valeurs de couleur des matrices d'image en matrices binaires d'image,
- utilisation d'un algorithme d'exploitation sur le contour de la masse de remplissage et évaluation du contour,
- enregistrement des résultats de mesure,
- activation d'un mécanisme de rejet en cas de capsules mal remplies.

14. Programme d'ordinateur selon la revendication 13 précédente, **caractérisé en ce que** par le programme, la tension de la source de lumière correspondant à la valeur optique est réglée à l'aide d'un algorithme de réglage.

15. Programme d'ordinateur selon l'une des revendications 13 et 14 précédentes, **caractérisé en ce que** la valeur du contrôle optique est comparée aux valeurs des mesures de poids de tare.
